# EUROPÄISCHE PATENTSCHRIFT

(11) **EP 1 943 327 B1**
(45) Veröffentlichungstag und Bekanntmachung des Hinweises auf die Patenterteilung: **08.08.2012**
(21) Anmeldenummer: 06753686.2
(22) Anmeldetag: 17.05.2006
(51) Int. Cl.: C12C 11/00, C12G 3/04, C12C 5/00

(54) **MIKROBIOLOGISCH STABILISIERTES BIER**
MICROBIOLOGICALLY STABILISED BEER
BIERE MICROBIOLOGIQUEMENT STABILISEE

(30) Priorität: 26.10.2005 DE 102005052210
(43) Veröffentlichungstag der Anmeldung: 16.07.2008
(73) Patentinhaber: Südzucker AG Mannheim/Ochsenfurt, 68165 Mannheim (DE)
(72) Erfinder: DÖRR, Tillmann, 67591 Hohen-Sülzen (DE); GUDERJAHN, Lutz, 67591 Offstein (DE); KOWALCZYK, Jörg, 67304 Eisenberg/Steinborn (DE); PAHL, Roland, 13351 Berlin (DE); SCHNEIDER, Jan, 32694 Schwelentrup (DE)
(74) Vertreter: Schwahn, Hartmut
(86) Internationale Anmeldenummer: PCT/EP2006/004682
(87) Internationale Veröffentlichungsnummer: WO 2007/048449

(56) Entgegenhaltungen:
- WO-A-2005/061690
- DE-A1- 2 344 252
- DE-A1- 10 361 313
- GB-A- 1 060 681

## Beschreibung

Die vorliegende Erfindung betrifft Mittel und Verfahren zur Herstellung von mikrobiologisch stabilisiertem Bier.

In den letzten etwa zehn Jahren ist wieder eine große Zahl von Kleinbrauereien, so genannte Hausbrauereien ("pub breweries") entstanden, die sich vor allem durch ihr kleines Produktionsvolumen, das meist nur den Ausschank in der eigenen Gaststätte und den Direktverkauf von kleinen Gebinden wie Flaschen abdeckt, sowie durch ein einfacheres Brau- und Abfüllverfahren von den Großbrauereien unterscheiden.

Während vor allem die Großbrauereien großtechnische Industrieanlagen bereithalten, mit denen ein Herstellen und Abfüllen des Biers unter keimhemmenden beziehungsweise keimarmen Bedingungen möglich ist, entbehren viele der Kleinbrauereien entsprechender Vorkehrungen und Maßnahmen. Bauliche oder verfahrenstechnische Maßnahmen, die zu solchen günstigen Bedingungen führen unter denen eine Kontamination mit bierschädlichen Mikroorganismen vollständig vermieden wird, sind für Kleinbrauereien meist wirtschaftlich unattraktiv.

Auf der anderen Seite wirkt sich gerade die keimarme Herstellung und Abfüllung positiv auf das Brauergebnis aus; viele der in der Herstellung eingeschleppten Mikroorganismen sind "bierschädigend". Ein arm an bierschädlichen Organismen hergestelltes Bier eignet sich zur längeren Lagerung und kann auch in einer nicht vollständig keimfreien Umgebung leicht in Flaschen beziehungsweise Fässern abgefüllt werden, ohne dass ein negatives Ergebnis zu erwarten ist. Es ist wünschenswert, möglichst einfache und kostengünstige Verfahren und Mittel bereitzustellen, die es sowohl großindustriell geführten Brauereien, als auch Kleinbrauereien erlauben, eine Herstellung und Abfüllung von Bier durchzuführen, das mikrobiologisch stabilisiert ist.

Ein Risiko der Verkeimung, das heißt der mikrobiologischen Destabilisierung, des Biers besteht vor allem im Zusammenhang mit der Abfüllung des Biers in Flaschen, Fässer oder ähnliche Gefäße. Unter "keimarm" wird keine vollkommene Keimfreiheit verstanden. Die Zahl der im Bier vorhandenen bierschädlichen Keime, besonders Mikroorganismen wie Bakterien und Pilze, sollte so klein sein, dass das Bier über längere Lagerzeit von Wochen und Monaten nicht verdirbt. Wird die Zahl der bierschädlichen Keime klein gehalten, ist die Wahrscheinlichkeit geringer, dass sich darunter bierschädigende Kulturen entwickeln. Vorzugsweise erfolgt die Abfüllung getränkesteril beziehungsweise biersteril.

Verfahren zur keimarmen Abfüllung von Bier und anderen Getränken sind aus dem Stand der Technik bekannt. Ein keimarmes Abfüllen von Bier kann unter erhöhtem Aufwand biologischer Überwachung erfolgen. In diesem Fall werden intensive Reinigungs- und Sterilisierungsmaßnahmen an den Abfüllanlagen und den zugehörigen Räumlichkeiten vorgenommen. Diese Maßnahmen sind von einem hohen Aufwand biologischer Kontrollen begleitet und sind mit großem Arbeitsaufwand und hohen Kosten verbunden. Sowohl für die ständige Überwachung der Keimarmut als auch für deren Erhaltung müssen teilweise aufwändige apparative oder verfahrenstechnische Maßnahmen getroffen werden. Die Sicherheit ist gegenüber dem erforderlichen Aufwand jedoch vergleichsweise klein. Derartige Maßnahmen werden daher selten angewendet. Für die Abfüllung zuckerhaltiger Biergetränke wie Biermischgetränke oder Malzbier, die ein besonders hohes Verkeimungsrisiko aufweisen, ist das Verfahren nicht sicher genug.

Eine weitere Maßnahme zur keimarmen Abfüllung von Bier ist die Kurzzeiterhitzung (KZE). Dabei wird Bier mittels eines Kurzzeiterhitzers, meist ein Plattenwärmetauscher, im Durchfluss erhitzt und anschließend wieder abgekühlt. Die KZE wird dabei idealerweise direkt vor dem Füller installiert. Dennoch besteht die Gefahr einer Sekundärkontamination, beispielsweise während des Abfüllprozesses oder durch Abfüllung in bereits verkeimte Gebinde. Die KZE ist eine häufig angewendete Maßnahme; sie ist jedoch nicht sicher genug für die Abfüllung zuckerhaltiger Biergetränke.

Eine weitere Maßnahme zur keimarmen Abfüllung von Bier ist die Membranfiltration oder Kaltentkeimung. Das Verfahren entspricht grundsätzlich dem Verfahren der KZE, jedoch wird anstelle eines Kurzzeiterhitzers ein Membranfiltrationssystem zur Keimreduzierung eingesetzt, das aufgrund der Porengröße des Filters die Abtrennung von im Bier vorhandenen Mikroorganismen ermöglicht. Auch hier ist die Gefahr der Sekundärkontamination gegeben. Das Verfahren ist ebenfalls nicht sicher genug für die Abfüllung zuckerhaltiger Biergetränke.

Eine weitere Maßnahme ist die Vollpasteurisierung von bereits abgefüllten und verschlossenen Flaschen oder Dosen, vorzugsweise im Tunnelpasteur oder Kammerpasteur. Bei diesem Verfahren werden die Gefäße, worin das Bier abgefüllt wurde, beispielsweise durch Heißwasser beziehungsweise Dampf erhitzt und anschließende wieder abgekühlt. Das Verfahren wird häufig in Brauereien mit weiten Distributionswegen, beispielsweise beim Bierexport nach Übersee eingesetzt. Die Gefahr der Sekundärkontamination während der Abfüllung ist hierbei kontrollierbar. Damit können auch zuckerhaltige Getränke wie Malzbier oder Biermischgetränke biologisch ausreichend sicher stabilisiert werden. Aufgrund des hohen apparativen Aufwands ist dieses Verfahren kostenintensiv. Nachteilig sind neben den hohen laufenden Kosten, wie erhöhtem Wasser- und Energiebedarf, die hohen Investitionskosten für die Anlagen, der hohe Platzbedarf. Außerdem sind regelmäßig hohe Anforderungen an die Gebinde und den Verschluss (insbesondere Temperatur- und Druckstabilität) zu stellen. Beispielsweise Kunststoffflaschen aus dem im Getränkebereich gängigen PET sind nach bekannten Verfahren nicht pasteurisierbar. Weiter nachteilig ist die Geschmacksbeeinträchtigung durch den Vorgang des Pasteurisierens.

Weitere Möglichkeiten zur keimarmen Abfüllung von Bier beziehungsweise zur Bereitstellung von abgefülltem mikrobiologisch stabilisiertem Bier sind Verfahren die aus der Saft-, Limonadenindustrie bekannt sind. Dazu zählt die chemische Sterilisierung. Bei einigen Limonaden ist es lebensmittelrechtlich möglich, den Konservierungsstoff Dimethyldicarbonat (DMDC) kurz vor der Abfüllung einzusetzen. In der Regel ist eine vorausgehende KZE erforderlich. Die zugesetzte Substanz wirkt bei korrekter Anwendung noch in der abgefüllten und verschlossenen Flasche und zerfällt nach einer gewissen Zeit. Nachteilig ist die sehr schwierige technische Anwendung der Substanz im Brauereibetrieb, da sie gesundheitsschädlich ist und einen hohen Gefrierpunkt aufweist. Für zuckerhaltige Biere wie Biermischgetränke oder Malzbier ist die Anwendung dieser Substanz ungeeignet, da die erlaubte Konzentration nur im konzentrierten Limonadenanteil oder Limonadengrundstoff verwendet werden darf. Im Zusammenhang mit der Bierabfüllung müsste die Substanz aber zu einem frühen Zeitpunkt hinzugefügt werden, sodass das Risiko besteht, dass diese in der abgefüllten Flasche bereits nicht mehr wirksam ist. Die vorgenannte chemische Sterilisierung kommt für die Bierabfüllung somit generell nicht in Frage.

Eine weitere aus dem Bereich der Saft- und Limonadenindustrie bekannte Abfüllungsart ist die aseptische, das heißt keimfreie, Abfüllung. Diese ist verbunden mit einem erheblichen Anlagetechnischen Aufwand wie Reinraum und Isolatortechnik. Dieses Verfahren setzt außerdem eine Umstellung des Qualitätssicherungskonzepts einschließlich der Validierung und Mitarbeiterqualifizierung voraus. Der Einsatz für die großindustrielle Bierabfüllung als auch für die Abfüllung aus Hausbrauereien ist aufgrund des hohen technischen und organisatorischen Aufwands unrealistisch.

DE 23 44 252 beschreibt ein Verfahren zur Herstellung eines alkoholarmen, hellen, bierähnlichen Getränks mit Isomaltulose.
DE 103 61 313 und WO 2005/061690 beschreiben ebenfalls Verfahren zur Herstellung alkoholarmer Biere oder bierähnlicher Erfrischungsgetränke mit Isomaltulose. GB 1,060,681 betrifft Verfahren zur Herstellung von alkoholischen Getränken und beschreibt Verfahren mikrobiologischer Stabilisierung.

Das der vorliegenden Erfindung zugrunde liegende technische Problem besteht demgemäß im Wesentlichen darin, Verfahren und Mittel zur Herstellung und Abfüllung von Bier oder Biermischgetränken bereitzustellen, die insbesondere einfach und kostengünstig durchzuführen sind und die die Zahl bierschädlicher Mikroorganismen während und/oder nach der Herstellung effektiver reduzieren beziehungsweise stabilisieren. Dadurch soll ein im abgefüllten Zustand mikrobiologisch stabilisiertes Bier oder Biermischgetränk erhalten werden. Weiter sollen die Verfahren und Mittel geeignet sein, in bekannten Bierherstellverfahren und Brauanlagen ohne wesentliche Anpassung der Verfahrensschritte eingesetzt werden zu können.

Das technische Problem wird gelöst durch die Bereitstellung eines Verfahrens zur Herstellung von mikrobiologisch stabilisiertem Bier oder Biermischgetränk aus Brauwasser, Hopfen und mindestens einer Kohlenhydratquelle, wobei in einem ersten Schritt (a) Brauwasser, Hopfen und eine Kohlenhydratquelle zu einer Würze vermischt werden. In einem nachfolgenden Schritt (b) wird die Würze gekocht. In einem nachfolgenden Schritt (c) wird die Würze mikrobiell vergärt. Das erfindungsgemäße Verfahren ist dabei dadurch gekennzeichnet, dass Isomaltulose, zusätzlich oder ausschließlich nach der Filtration des Bieres oder, zusätzlich oder ausschließlich, unmittelbar vor dem Abfüllen oder vor der Lagerung des Bieres oder Biermischgetränks zugegeben wird.

Die Erfindung lehrt also, Bier oder Biermischgetränke aus Brauwasser, Hopfen und einer Kohlenhydratquelle herzustellen, wobei Isomaltulose oder ein Isomaltulose-haltiges Gemisch als keimstabilisierendes Agens zugegeben wird. Die Erfinder fanden überraschend, dass Isomaltulose oder Isomaltulose-haltiges Gemisch in der Kohlenhydratquelle die Keimzahl von als nachteilig, das heißt bierschädlich, anerkannten Mikroorganismen reduziert beziehungsweise das erhaltene Bier mikrobiell stabilisiert. Durch Isomaltulose oder Isomaltulose-haltiges Gemisch wächst die Zahl dieser Mikroorganismen im weiteren Herstellverfahren und bei der Abfüllung nicht, sodass anschließend ein an bierschädlichen Keimen armes beziehungsweise ein an bierschädlichen Keimen im Wesentlichen freies Bier erhalten wird, das mikrobiell stabilisiert ist. Das auf diese Weise erhaltene und abgefüllte Bier eignet sich dann besonders für eine längere Lagerung.

Unter "mikrobiell stabilisiert" beziehungsweise "keimstabilisiert" wird vorliegend verstanden, dass ein grundsätzlich der Verkeimung und dem Verderb ausgesetztes Nahrungsmittel bestimmte Eigenschaften aufweist, wodurch ein weiteres beziehungsweise unerwünschtes Wachstum von Mikroorganismen unterdrückt oder vollständig unterbunden wird. Solche Mikroorganismen, die auch als Keime bezeichnet werden, sind in erster Linie Bakterien und Pilze wie Schimmelpilze oder Hefepilze. Dazu zählen nicht nur diejenigen Organismen, die aufgrund ihrer Stoffwechselaktivität Qualität und Geschmack des Nahrungsmittels nachteilig beeinflussen, sondern auch potentiell pathogene Keime, die die Gesundheit des Menschen gefährden können. Die erfindungsgemäße Keimstabilisierung führt dazu, dass die Zahl solcher Mikroorganismen in zweckmäßigen Zeiträumen der Lagerung nicht über eine bestimmte Schwelle ansteigt, sodass das Nahrungsmittel nicht verdorben wird oder ein Gesundheitsrisiko von ihm ausgeht.

Im Zusammenhang mit der vorliegenden Erfindung wird unter "Bier", wie der Fachmann leicht erkennen kann, nicht nur ein Bier verstanden, das nach vollständiger beziehungsweise nahezu vollständiger Vergärung der Würze, das heißt der darin enthaltenen Kohlenhydratkomponenten, erhalten wird. Unter Bier wird vorliegend auch ein Biermischgetränk verstanden, welches erhalten wird, wenn Bier vor, während oder nach seiner Herstellung mindestens eine weitere Kohlenhydratkomponente, die nicht oder nur teilweise vergoren wird, zugefügt wird. Beispielsweise wird vorliegend unter Bier ein Biermischgetränk verstanden, worin konventionell hergestelltem Bier bei oder nach der Herstellung Isomaltulose zugefügt wurde.

Das keimstabilisierende Agens kann auch einer Kohlenhydratquelle zugefügt werden, die vermälztes Getreide (Malz), Getreide-Rohfrucht oder eine Mischung aus vermälztem Getreide und Getreide-Rohfrucht enthält. Dabei ist in der eingesetzten Kohlenhydratquelle also bevorzugt Malz und/oder Rohfrucht teilweise durch Isomaltulose oder durch ein Isomaltulose-haltiges Gemisch ersetzt. Das Verhältnis der übrigen Bestandteile der Kohlenhydratquelle, also besonders dem Malz und/oder der Getreide-Rohfrucht, zur zugesetzten Isomaltulose beträgt von 6:1 bis 1:1, bevorzugt 4:1 bis 2:1, besonders bevorzugt, je nach Anwendungsgebiet, gerade 6:1, 5:1, 4:1, 3:1, 2:1 oder 1:1.

Um die bekannten und bewährten Verfahren zur Herstellung von Bier möglichst wenig abzuwandeln, wird Isomaltulose oder das Isomaltulose-haltige Gemisch der Kohlenhydratquelle, bevorzugt vor dem Vermischen mit Brauwasser und Hopfen, bevorzugt als Sirup, als Lösung und/oder als kristalliner Feststoff zugesetzt. Dabei wird Isomaltulose beziehungsweise das Isomaltulose-haltige Gemisch zusammen mit der übrigen Kohlenhydratquelle, dem Brauwasser und dem Hopfen zur Würze hinzugegeben.

Isomaltulose kann auch im Sudhaus dem Bier zugegeben werden und durchläuft danach die gesamte Haupt- und Nachgärung.

Isomaltulose kann auch ausschließlich oder zusätzlich nach der Hauptgärung zugegeben werden. Die Zugabe der Isomaltulose nach der Hauptgärung stellt sicher, dass die Isomaltulose nicht in der Hauptgärung verstoffwechselt werden kann, allerdings ist während der Nachgärung in der Regel noch Restaktivität der Hefe vorhanden.

Erfindungsgemäß wird Isomaltulose zusätzlich oder ausschließlich erst nach der Filtration zum Bier zugegeben. Wird die Isomaltulose nach der Filtration zum Bier gegeben, ist das Gemisch durch die Abtrennung der Hefe keinen Veränderungen durch die gewünschten Fermentationsvorgänge unterworfen.

Erfindungsgemäß wird die Isomaltulose alternativ, zusätzlich oder ausschließlich unmittelbar vor dem Abfüllen beziehungsweise vor der Lagerung des Bieres oder Biermischgetränks zugegeben.

In den erfindungsgemäßen Modalitäten der Isomaltulosezugabe wirkt Isomaltulose erfindungsgemäß als keimstabilisierendes, das Keimwachstum hemmendes beziehungsweise keimhinderndes Agens. In jedem Fall fügt sich die Isomaltulosezugabe, sei es in Form als Sirup, als Lösung oder als kristalliner Feststoff, ohne Schwierigkeiten in bekannte Bierherstellverfahren ein, sodass verfahrenstechnischer oder apparativer Mehraufwand vermieden wird.

Vor allem bei Biermischgetränken, die aufgrund des Limonadenanteils in der Regel leichter verderblich sind, trägt die Verwendung von Isomaltulose in Bieranteil zu einer erheblichen Verbesserung der biologischen Stabilität des Biermischgetränks bei. Daneben ergeben sich weitere bekannte Vorteile wie die Diabetikereignung des hergestellten Biermischgetränks.

Überraschenderweise tritt bei der erfindungsgemäß bevorzugten Verwendung von Isomaltulose in Biermischgetränken der von anderen Zuckeraustauschstoffen beziehungsweise Süßungsmittel bekannte nachteilige Effekt der Geschmacksverschlechterung nicht auf. Insbesondere beeinträchtigt der Zusatz von Isomaltulose in Bier beziehungsweise Biermischgetränken Geschmacksaspekte wie die Vollmundigkeit nicht oder nur unwesentlich.

Möglich ist daher auch, ein Bier oder Biermischgetränk herzustellen, worin Isomaltulose als süßendes Agens enthalten ist. Bevorzugt ist Isomaltulose als einziges süßendes Agens enthalten. Weiter bevorzugt ist Isomaltulose als einziges körpergebendes süßendes Agens enthalten.

Ein erfindungsgemäßer Gegenstand ist daher auch die Verwendung von Isomaltulose als keimstabilisierendes beziehungsweise keimhinderndes Agens zur keimarmen Herstellung, vor allem Abfüllung von Bieren oder Biermischgetränken, besonders nach dem hier beschriebenen erfindungsgemäßen Verfahren und seinen bevorzugten erfindungsgemäßen Abwandlungen.

Isomaltulose ist ein reduzierender Zucker, der überraschenderweise von Bierhefen wie Saccharomyces cerevisiae oder Saccharomyces carlsbergensis nicht oder nur sehr schwer assimiliert und metabolisiert werden kann. Isomaltulose (6-O-α-D-Glucopyranosylfructose), bekannt unter der Bezeichnung Palatinose^{™}, ist eine Disaccharid-Ketose, die natürlicherweise vorkommt, beispielsweise in Honig. Isomaltulose kann gemäß DE 44 14 185 C1 durch enzymatische Umlagerung, beispielsweise unter Verwendung immobilisierter Bakterienzellen insbesondere der Spezies *Protaminobacter rubrum, Erwinia rhapontici* und *Serratia plymuthica* oder einer daraus isolierten Saccharose-Isomerase großtechnisch aus Saccharose hergestellt werden.

Bei einem "Isomaltulose-haltigen Gemisch" handelt es sich um eine Kombination von Isomaltulose mit mindestens einem weiteren Kohlenhydrat, besonders Fruktose, Glukose, Saccharose, Trehalulose, Leucrose, Tagatose, Turanose, Isomaltose, Isomelizitose, Oligosacchariden mit einem Polymerisationsgrad von 3 oder 4 oder mehr oder Gemischen davon. In einer Variante enthält das Gemisch Isomaltulose und Fruktose, in einer weiteren Variante enthält das Gemisch Isomaltulose und Glukose, in einer weiteren Variante enthält das Gemisch Isomaltulose und Saccharose, in einer weiteren Variante enthält das Gemisch Isomaltulose und Trehalulose, in einer weiteren Variante enthält das Gemisch Isomaltulose und Leucrose, in einer weiteren Variante enthält das Gemisch Isomaltulose und Tagatose, in einer weiteren Variante enthält das Gemisch Isomaltulose und Turanose, in einer weiteren Variante enthält das Gemisch Isomaltulose und Isomaltose, in einer weiteren Variante enthält das Gemisch Isomaltulose und Isomelizitose, in einer weiteren Variante enthält das Gemisch Isomaltulose und Oligosaccharide mit einem Polymerisationsgrad von 3 oder 4 oder mehr. In bevorzugter Ausführungsform ist das Isomaltulose-haltige Gemisch das Saccharose-Isomerisierungsprodukt, das mittels Transglucosidierung der Saccharose, vorzugsweise unter Verwendung toter oder lebender Zellen von Protaminobacter rubrum oder daraus hergestellter Enzymextrakte, gewonnen wird. Isomaltulose-haltige Gemische enthalten in einer besonders bevorzugten Ausgestaltung der Erfindung etwa 79-85 % Isomaltulose, 8-10 % Trehalulose, 0,5-2 % Saccharose, 1-1,5 % Isomaltose, Oligosaccharide, 2,5-3,5 % Fructose und 2,0-2,5 % Glucose oder bestehen daraus, wobei sich diese Angaben auf den prozentualen Feststoffgehalt beziehen.

Unter einer "Würze" wird der von unlöslichen Bestandteilen befreite Extrakt aus einer Kohlenhydratquelle, beispielsweise Malz, verstanden, der mit Wasser und vorzugsweise mit Hopfen versetzt und gekocht wird. Nach dem Kochen mit Hopfen wird die sogenannte Ausschlag-Würze erhalten. Nach Abkühlen liegt die gekochte Würze als Anstellwürze vor. Die Würze wird vorzugsweise mittels Maischen, Abläutern, Würze-Kochen und Würze-Behandlung hergestellt. Die Herstellung der Würze dient besonders dem Ziel, die zunächst ungelösten Bestandteile der Kohlenhydratquelle, insbesondere von Malz, in lösliche vergärbare Stoffe umzuwandeln, die verbleibenden festen Bestandteile abzutrennen und schließlich das Gewürz, d.h. den Hopfen, zuzugeben. Beim Maischen wird vorzugsweise zunächst die geschrotete Kohlenhydratquelle, insbesondere Malz, mit dem Brauwasser vermischt. Anschließend erfolgt vorzugsweise in dem so genannten Maischverfahren, in einem spezifischen Temperatur-ZeitProgramm, eine gezielte enzymatische Umwandlung von Inhaltsstoffen der Kohlenhydratquelle, wobei der wichtigste Prozess der vollständige Abbau von Stärke zu vergärbaren Zuckern wie Glukose, Maltose oder Maltotriose und nicht vergärbaren Dextrinen ist. Das Temperatur-Optimum der Maltose-Bildung liegt bei 60°C-65°C, das der Dextrinbildung bei 70°C-75°C. Die Temperatur bestimmt den Endvergärungsgrad der Würze je nach Biertyp. Nach dem Läutern und Absüßen der Treber mit heißem Brauwasser (78°C) wird die Würze vorzugsweise 60 min bis 100 min vorzugsweise unter Zugabe von Hopfen gekocht, wobei, je nach herzustellendem Biertyp, vorzugsweise etwa 150 bis 500 g/hl Hopfen zugegeben werden. Durch Verdampfen von vorzugsweise etwa 6-10 % der Ausgangsmenge wird der Stammwürze-Gehalt eingestellt. Beim Kochen erfolgt zudem eine Keimfreimachung, es kommt zur Koagulation von Eiweißstoffen, Hopfenbitterstoffe werden isomerisiert und Aromastoffe werden gebildet und teilweise auch verdampft. Die gekochte und gehopfte Würze wird anschließend vorzugsweise im Whirlpool und/oder durch Filtration von Trubstoffen befreit. Nach dem Kühlen der Würze, die üblicherweise im Plattenwärmetauschern erfolgt, wird der Kühltrub vorzugsweise partiell entfernt und es erfolgt eine intensive Belüftung zur Versorgung der zur Gärung eingesetzten Mikroorganismen mit Sauerstoff. Unmittelbar darauf wird die Würze vorzugsweise mit mindestens einem geeigneten gärkräftigen Mikroorganismus, beispielsweise Hefe versetzt. Da die zur Vergärung eingesetzte Würze unterschiedliche Kohlenhydratquellen enthalten kann, lassen sich unter Verwendung des erfindungsgemäßen Verfahrens auch helle oder dunkle mikrobiologisch stabilisierte Biere herstellen.

Es kann auch ein Teil des Extraktes der Würze durch Isomaltulose ersetzt werden. So wird der Anteil an metabolisierbaren Kohlenhydraten in der Würze reduziert, so dass vorzugsweise außerdem der Alkoholgehalt des hergestellten Getränkes gegenüber dem eines normalen Bieres herabgesetzt wird. Der Alkoholgehalt der eindungsgemäß hergestellten mikrobiologisch stabilisierten Biere kann gegebenenfalls unter Verwendung von Alkoholentzugsverfahren weiter abgesenkt werden. Unter einem "alkoholfreien Bier" wird ein Bier mit einem Alkoholgehalt von unter 0,5 % verstanden, das vorzugsweise etwa 7 bis 8 % Stammwürze aufweist. (%-Angaben sind, wenn nicht anders angegeben, Volumen-%). Unter einem "alkoholarmen Bier" wird erfindungsgemäß ein Bier verstanden, das einen Alkoholgehalt von weniger als 5 %, insbesondere weniger als 4 % aufweist.

Unter einer "Kohlenhydratquelle" werden Kohlenhydrate enthaltende Materialien wie Getreideprodukte verstanden, bei denen die Kohlenhydrate zumindest teilweise bei der Herstellung der Würze in vergärbare lösliche Zucker wie Glukose, Maltose oder Maltotriose überführt werden können, die dann bei der Gärung von Mikroorganismen, insbesondere Hefen, als Kohlenstoffquelle genutzt werden. In bevorzugter Ausführungsform der Erfindung handelt es sich bei der eingesetzten Kohlenhydratquelle um vermälztes Getreide, Rohfrucht oder ein Gemisch davon.

Vermälztes Getreide sind vorzugsweise Körner und Samen von Gerste, Weizen, Roggen, Hafer, Hirse, Triticale, Reis, Sorghum und/oder Mais, die einem Malzherstellungsverfahren unterzogen wurden. Rohfrucht sind vorzugsweise Körner und Samen von Gerste, Weizen, Roggen, Hafer, Hirse, Sorghum Triticale, Reis und/oder Mais, die zwar verschrotet wurden, jedoch nicht vermälzt wurden.

Vorzugsweise werden die Ausgangsmaterialien vor der Vergärung verzuckert. Dazu werden die malzeigenen hydrolytisch wirkenden Enzyme wie Amylasen, Maltasen etc., die die Stärke in nicht vergärbare Dextrine und vergärbare Glukose, Maltose und Maltotriose überführen, genutzt. Bei der Malzbereitung lässt man die geweichten Cerealien vorzugsweise bei 12°C bis 18°C keimen und unterbricht den Keimprozess, sobald die Enzymbildung und Lösungsvorgänge das gewünschte Maß erreicht haben. Dies erfolgt bevorzugt durch Anwendung erhöhter Temperaturen bei großem Luftdurchsatz. Durch Vortrocknen bei vorzugsweise 40 bis 50°C (Schwelken) kann der Wassergehalt von über 50% auf 10 bis 12% gesenkt werden. Danach kann die Temperatur auf vorzugsweise etwa 80 bis 85°C angehoben werden, um das Malz auf einen Wassergehalt von vorzugsweise etwa 4 bis 5% zu bringen. Dieser Vorgang wird als Darren bezeichnet.

Der Gärprozess erfolgt vorzugsweise in zwei Stufen. Die Hauptgärung wird durch Zusatz von Mikroorganismen, insbesondere Hefen, untergärige Hefen oder obergärige Hefen, eingeleitet. Am Ende der Hauptgärung scheidet sich die Hefe dann am Boden oder im Konus des Gärgefäßes ab. Das bei der Hauptgärung erhaltene Jungbier wird vorzugsweise zurückgekühlt und einer Nachgärung unterzogen, wobei der Restextrakt vergärt und das Bier vorzugsweise geklärt wird. Beim Gären verschwindet auch der Würzegeschmack, wobei sich insbesondere bei der Nachgärung der reine Biergeschmack ausbildet. Dieser Prozess wird auch als Reifung bezeichnet. Die Gärung kann beispielsweise durch unterschiedlicher Gärtemperatur, obergärige und untergärige Produktionsweise, offene Gärung oder geschlossene Gärung etc. beeinflusst werden.

Bevorzugt wird zum Vergären ein einziger oder mehrere der Mikroorganismen, ausgewählt aus einem untergärigen Saccharomyces cerevisiae-Stamm, einem obergärigen Saccharomyces cerevisiae-Stamm, Saccharomyces carlsbergensis, Saccharomyces diastaticus und Schizosaccharomyces pombe, verwendet.

Bevorzugt wird unter Verwendung des erfindungsgemäßen Verfahrens mikrobiologisch stabilisiertes obergäriges oder untergäriges Bier hergestellt. Untergäriges Bier wird bei einer Untergärung erhalten, wobei sich die Hefe nach der Gärung am Boden des Gefäßes absetzt und dort getrennt werden kann. Bei obergärigem Bier handelt es sich um ein Bier, das durch Obergärung erhalten wird, wobei die Hefe am Ende der Gärung nach oben steigt und oben, soweit es möglich ist, abgetrennt wird.

In einer weiteren bevorzugten Ausführungsform der Erfindung ist vorgesehen, dass der Gärprozess unter Verwendung mindestens einer Hefe und mindestens eines Säurebildners ausgewählt aus der Gruppe bestehend aus Vertretern von Lactobacillus sp., Acetobacter sp. und Gluconobacter sp. durchgeführt wird. In einer bevorzugten Ausgestaltung dieser Ausführungsform ist beispielsweise vorgesehen, dass die Gärung unter Verwendung von S. cerevisiae und/oder S. diastaticus und/oder Schizosaccharomyces pombe und einem Lactobacillus-Vertreter durchgeführt wird. Lactobazillen, die auch als Milchsäurebakterien bekannt sind, sind zur Milchsäuregärung befähigt. Die aufgrund einer solchen Gärung hergestellten alkoholarmen oder alkoholfreien Biere beziehungsweise bierähnlichen Getränke zeichnen sich durch einen milden säuerlichen Geschmack aus, der etwa dem von Berliner Weiße entspricht.

In einer weiteren bevorzugten Ausgestaltung dieser Ausführungsform ist beispielsweise vorgesehen, dass die Gärung unter Verwendung von S. cerevisiae und/oder S. diastaticus und/oder Schizosaccharomyces pombe und einem Acetobacter-Vertreter durchgeführt wird. Die Gattung Acetobacter umfasst im engeren Sinn die Essigsäurebakterien, die durch Oxidation von Ethanol Essigsäure bilden können. Den hergestellten alkoholarmen oder alkoholfreien Bieren beziehungsweise bierähnlichen Getränken wird ein säuerlicher Geschmack verliehen, der sich deutlich von dem Geschmack der unter Verwendung von Lactobacillus erhaltenen Getränke unterscheidet.

In einer weiteren bevorzugten Ausgestaltung dieser Ausführungsform ist beispielsweise vorgesehen, dass die Gärung unter Verwendung von S. cerevisiae und/oder S. diastaticus und/oder Schizosaccharomyces pombe und einem Gluconobacter-Vertreter durchgeführt wird. Gluconobacter kann einerseits Ethanol zu Essigsäure und andererseits Glukose zu Gluconsäure oxidieren. Die durch diese Mischgärung hergestellten alkoholarmen oder alkoholfreien Bieren beziehungsweise bierähnlichen Getränke weisen ebenfalls einen angenehmen säuerlichen Geschmack auf.

Gegenstand der vorliegenden Erfindung ist demgemäß auch ein mikrobiologisch stabilisiertes Bier, das nach dem vorbeschriebenen Verfahren herstellbar ist, und das bevorzugt nach diesem Verfahren hergestellt wird.

Ein Gegenstand ist auch ein mittels des erfindungsgemäßen Verfahrens hergestelltes mikrobiologisch stabilisiertes alkoholarmes oder alkoholfreies Bier, Diätbier, Malztrunk, Malzbier oder bierähnliches Erfrischungsgetränk. In einer bevorzugten Ausführungsform ist es ein helles mikrobiologisch stabilisiertes alkoholarmes oder alkoholfreies Bier oder ein dunkles mikrobiologisch stabilisiertes alkoholarmes oder alkoholfreies Bier.

Unter "Malztrunk" wird vorliegend ein vor allem malzaromatisches, malzsüßes, schwach gehopftes, kohlensäurehaltiges und dunkles Getränk verstanden, das zudem alkoholarm bis alkoholfrei ist. Vorzugsweise wird der Malztrunk mit etwa 7-8 % Stammwürze aus dem Malzanteil eingebraut. Nach der Filtration wird mit bevorzugt süßenden Zuckern (Glukose, Saccharose) auf 12 % Stammwürze eingestellt (etwa ein Drittel der Stammwürze).

Aufgrund der Vorteile von Isomaltulose gegenüber herkömmlichem Zucker, das heißt Saccharose, wie weniger Süßkraft, höhere mikrobiologische Stabilität, Eignung für Diabetiker, antikariogene Eigenschaften, kann der Anteil von Isomaltulose an der Stammwürze noch höher gewählt werden.

Ein weiterer Gegenstand ist auch ein mikrobiologisch stabilisiertes Biermischgetränk, welches das erfindungsgemäße mikrobiologisch stabilisierte Bier und mindestens eine weitere Komponente ausgewählt aus: Kräuterextrakten, Aromen, Koffein, Farbstoffen, Aminosäuren, Genusssäuren, Fruchtkomponenten wie Fruchtsaft, Fruchtmark, Fruchtpulpe oder Fruchtextrakten, Zucker, Zuckeraustauschstoffen wie Zuckeralkoholen, Intensivsüßstoffen, Wasser und Branntwein (Ethanol) enthält. Vorzugsweise besteht das Biermischgetränk aus dem erfindungsgemäßen mikrobiologisch stabilisiertem Bier und der mindestens einen weiteren Komponente.

Unter "Kräuterkomponenten" werden besonders verstanden: Extrakte, Lösungen, Auszüge oder Essenzen aus Pflanzenteilen, vorzugsweise von Anis, Baldrianwurzel, Brennnessel, Brombeerblättern, Erdbeerblättern, Fenchel, Frauenmantel, Gänsefingerkraut, Ginseng, Hagebutte, Hibiskusblüten, Himbeerblättern, Holunder, Hopfen, Ingwer, Johanniskraut, Kamille, Koriander, Krauseminze, Lapacho-Pflanze, Lavendel, Limonen-Gras, Majoran, Malve, Melisse, Mistel, Pfefferminze, Ringelblume, Rosmarin, Enzian, Schafgarbe, Thymian, Ysop, Zimt etc.

Unter "Fruchtkomponenten" werden besonders verstanden: Fruchtextrakte, vorzugsweise aus Äpfeln, Bananen, Birnen, Ananas, Orangen, Grapefruit, Kirsche, Sauerkirsche, Limonen, Zitronen, Passionsfrüchten, Pfirsichen, Sanddorn, Himbeeren, Erdbeeren, Brombeeren, Johannisbeeren, Stachelbeeren, Kiwi-Früchten, etc.

Bevorzugt ist vorgesehen, dass das Biermischgetränk natürliche oder naturidentische Geruch- und/oder Geschmacksstoffe als Aromakomponente wie ätherische Öle aus Pflanzen oder Früchten wie Citrusöl, Pfefferminzöl oder Nelkenöl, Fruchtessenzen, aromagebende Fruchtsäfte, Anis, Menthol, Eukalyptus etc. enthalten.

Bei den Farbstoffkomponenten handelt es sich bevorzugt um Farbstoffe pflanzlicher Herkunft wie Carotinoide, Flavonoide oder Anthocyane, Farbstoffe tierischer Herkunft, anorganische Pigmente wie Eisenoxid-Pigmente, Produkte der enzymatischen und der nichtenzymatischen Bräunung, Erhitzungsprodukte wie Karamell, Zuckercouleur, oder synthetische Farbstoffe wie Azo-, Triphenylmethan-, Indigoid-, Xanthen- oder Chinolin-Verbindungen sein. Geeignete synthetische Farbstoffe sind beispielsweise Erythrosin, Indigo Camine oder Tartrazin, die zur Farbkorrektur und/oder zur Erzeugung eines ansprechenden Aussehens des erfindungsgemäßen Biermischgetränkes eingesetzt werden.

Die Aminosäure-Komponenten sind bevorzugt Gemische essentieller Aminosäuren. Bevorzugte Aminosäuren sind His, Ile, Leu, Lys, Thr, Trp, Val und Taurin.

Die Säure-Komponenten sind bevorzugt Genusssäuren. Die erfindungsgemäßen Getränke liegen in einer bevorzugten Ausführungsform auch als Sprudelgetränke vor, das heißt sie können Kohlensäure/Kohlendioxid enthalten.

Die erfindungsgemäßen Biermischgetränke sind in einer besonders bevorzugten Ausführungsform auch Coffein-Komponenten wie Extrakte, Aufbereitungen oder Auszüge aus Kaffeebohnen, Teepflanze oder Teilen davon, Mate-Pflanze oder Teilen davon, Kolanuss, Kakaobohne oder Guarana enthalten.

### Ausführungsbeispiele

Die Erfindung wird durch folgende Beispiele näher erläutert.

Die Figuren zeigen:
- Figur 1:: Isomaltulose Konzentrationen vor und nach Inkubation mit bierschädlichen Organismen;
- Figur 2:: Isomaltulose Konzentration in Abhängigkeit verschiedener Stabilitätsfaktoren;
- Figur 3:: Isomaltulose Konzentrationen in mit S. cerevisiae MJJ 2 inkubierten Proben;
- Figur 4:: Zuckerspektrumanalyse nach sieben Tagen Inkubation;
- Figur 5:: Säurekonzentrationen in Abhängigkeit von den gewählten Mikroorganismen.
- Figur 6:: Bewertende Verkostung von Biermischgetränken aus Grundbier und Limonade (Idealnote: 3): Grundbier=Pilsener (Figur 6a), Grundbier=Diätbier (Figur 6b), Grundbier=alkoholfreies Pilsener (Figur 6c), Grundbier=Doppelbock (Figur 6d),
- Figur 7:: Anteil der Aromakomponenten nach Vergärung von Realwürzen.
- Figur 8:: Bewertende Verkostung von Bieren aus Realwürzen.
- Figur 9:: Isomaltulosegehalte nach Vergärung von Modellmedien. Der Wertebereich von 5 % ober- und unterhalb vom Ausgangswert ist hervorgehoben.
- Figur 10:: Isomaltulosegehalte nach Vergärung von Modellmedien mit Bakterien. Der Wertebereich von 5 % ober- und unterhalb vom Ausgangswert ist hervorgehoben.
- Figur 11:: Trübungsverläufe in kontaminierten Biermischgetränken mit Süßungsmitteln Saccharose (Sac), Isomaltulose (Pal) oder Süßstoffmischung (Sst) bei Messwinkeln 90° und 25°.
- Figur 12:: Bombagenbildung bei PET-Flaschen mit kontaminierten Biermischgetränken mit Süßungsmitteln Saccharose (Sac), Isomaltulose (Pal) oder Süßstoffmischung (Sst).

### Beispiel 1: Verstoffwechselung von Isomaltulose im Modellmedium

### 1.1 Modellmedien

Das Modellmedium wurde wie folgt hergestellt: 50 g Isomaltulose wurden in 500 ml bidestilliertem Wasser gelöst; 6,7 g Yeast-Nitrogen-Base (YNB) wurden in 500 ml bidestilliertem Wasser gelöst; 5 ml der Isomaltuloselösung wurden in Reagenzgläsern mit Durham-Röhrchen autoklaviert; die YNB-Lösung wurde einzeln autoklaviert, danach wurden jeweils 5 ml steril in die bereits mit 5 ml Isomaltuloselösung gefüllten, autoklavierten Reagenzgläser pipettiert.

In einem ersten Ansatz wurden die Parameter pH-Wert, Alkoholgehalt und Abwesenheit von Sauerstoff so eingestellt, wie sie in abgefülltem Bier vorliegen: 5 % Alkoholgehalt (Ethanol), pH-Wert 4,5 und sauerstofffreie Inkubation (Anaerobiertopf). In weiteren Ansätzen wurden die jeweiligen wachstumshemmenden Faktoren variiert, siehe Tabelle 1.

**Tabelle 1:**

| Faktor | Einstellwerte |
|---|---|
| pH-Wert | 3,6; 3,8; 4,0; 4,2; 4,4 |
| Gehalt an Bitterstoffen (Isohumulonen) | 10; 20; 30; 40; 50 mg/l |
| Alkoholgehalt | 4,5; 5; 5,5; 6; 6,5 vol % |

Das unbehandelte Modellmedium hat einen pH-Wert von 5,1. Anhand von 100 ml der Modellösungen wurden die Mengen an 0,1-normaler Schwefelsäure 0,05 mol/l bestimmt, die zum Einstellen der erwünschten pH-Werte benötigt wurden. Schwefelsäure wurde gewählt, um dem Medium keine zusätzliche C-Quelle zuzuführen.

Eine 20-%ige Isohumulonlösung wurde 1:20 verdünnt, so dass 10 mg der Lösung etwa 0,1 mg Isohumulone enthalten:

| | |
|---|---|
| 20-%ige Lösung: | 1 mg der Lösung enthält 0,2 mg Isohumulone |
| | 10 mg der Lösung enthalten 2 mg Isohumulone; |
| Verdünnung 1:20: | 10 mg der verd. Lösung enthalten 0,1 mg Isohumulone; 10 mg der Lösung (0,1 mg Isohumulone) zu 10 ml der Modellösung gegeben, entsprechen 10 mg Isohumulone pro Liter. |

Der Alkoholgehalt wurde mit 96-%igen unvergälltem Alkohol auf die jeweiligen Konzentrationen eingestellt.

Die in aerober Atmosphäre inkubierten Reagenzgläser wurden mit Wattestopfen verschlossen, anaerobe Proben wurden ebenfalls mit Wattestopfen verschlossen, allerdings in einem Anaerobiertopf inkubiert.

### 1.2 Mikroorganismen

Eine Gruppe von Mikroorganismen wurde ausgewählt, die entweder als Bierschädlinge bekannt sind oder in Vorversuchen die Fähigkeit zeigten, Isomaltulose zu verwerten. Die Mikroorganismen sind in Tabelle 2 dargestellt.

**Tabelle 2:**

| Mikroorganismus | Getränkeschädigungspotential |
|---|---|
| Pediococcus damnosus | anaerob, wächst in Anwesenheit von Alkohol und Hopfenbitterstoffen |
| Lactobacillus brevis | anaerob, wächst in Anwesenheit von Alkohol und Hopfenbitterstoffen, sehr häufiger Bierverderber |
| Megasphera cerevisiae | streng anaerob, wächst in Anwesenheit von Alkohol und Hopfenbitterstoffen |
| Pectinatus frisenqensis | streng anaerob, wächst in Anwesenheit von Alkohol und Hopfenbitterstoffen |
| Schizosaccharomyces pombe | vergärt neben anderen Zuckern Isomaltulose schnell und vollständig |
| Saccharomyces diastaticus | in der Lage, Dextrine zu vergären (sogenannter Übervergärer) |
| Saccharomyces cerevisiae MJJ 2 | vergärt neben anderen Zuckern Isomaltulose schnell und vollständig |

Die Mikroorganismen wurden in 100 ml Nährlösung angezogen, danach mit Isomaltuloselösung gewaschen und in 5 ml Isomaltuloselösung resuspendiert. Die Reagenzgläser wurden mit 0,5 ml der resuspendierten Lösung inkubiert. Die Inkubation erfolgte bei 26 °C.

### 1.3 Analysen

Als Indikator für Wachstum wurde in den Reagenzgläsern das Auftreten von Trübung und Gasbildung bewertet. Um tatsächlichen Isomaltuloseabbau festzustellen, wurde der Extrakt vor und nach der Inkubation gemessen und mittels Extinktionsmessung bei Reaktion mit Dinitrosalicylsäure (DNS) der Gehalt an reduzierenden Zuckern vor und nach der Inkubation bestimmt.

Die Extraktmessung der Lösung erfolgte über die Dichteermittlung mittels eines Biegeschwingers (Fa. Anton-Paar).

Der Gehalt an Isomaltulose wurde durch die Reduktion von 3,5-Dinitrosalicylsäure zu 3-Amino-5-nitrosalicylsäure bestimmt. Dadurch ergibt sich in der Lösung ein Farbumschlag von gelb zu rot-braun. Die Konzentration eines reduzierenden Zuckers kann aufgrund dieses Farbumschlags photometrisch quantitativ bestimmt werden. Da Isomaltulose im Testmedium der einzige Zucker ist (im Gegensatz zu Realmedien wie Würze), kann mit der DNS-Methode die Konzentration der Isomaltulose vor und nach der Inkubation bestimmt werden.

In 50 ml destilliertem Wasser wurden 30 g K-Na-Tartrat gelöst, und 20 ml NaOH (2 mol/l) zugegeben. In diese Lösung wurde unter Rühren 1 g Dinitrosalicylsäure (DNS) gegeben. Hiernach wurde mit destilliertem Wasser auf 100 ml aufgefüllt.

Es wurden 0,25 ml der zu untersuchenden Lösung in ein Reagenzglas vorgelegt und mit 0,25 ml der DNS-Lösung vermischt. Beide Lösungen zusammen wurden für fünf Minuten im kochenden Wasserbad erhitzt. Nach Abkühlung werden 9 ml Wasser (destilliert) zugegeben und nach Mischen die Extinktion bei 546 nm gemessen. Nach Erstellen einer Kalibriergeraden konnte so die Konzentration von Isomaltulose in der Modellösung vor und nach Inkubation ermittelt werden.

Es zeigte sich, dass eine ermittelte Kalibriergerade die beste Genauigkeit hatte in einem Konzentrationsbereich von unter 1,5 % Zucker in der Lösung. Entsprechend wurden die zu messenden Proben vor der Messung 1:5 verdünnt, um bei theoretischen 5 % Isomaltulose (vor Inkubation) in der Lösung in den Bereich der besten Genauigkeit zu gelangen.

### 1.4 Ergebnisse

Die Tabelle 3 zeigt die Ergebnisse der visuellen Wachstumsbeurteilung anhand der Parameter Trübungsentstehung und Gasbildung (n.b.: nicht betrachtet, +: Trübungs- und/oder Gasbildung, -: keine Trübungs- oder Gasbildung)

**Tabelle 3:**

| | pH 4,5 | Alkohol 5% v/v | anaerob |
|---|---|---|---|
| Schizosaccharomyces pombe | + | + | + |
| Saccharomyces cerevisiae MJJ 2 | + | + | + |
| Saccharomyces diastaticus | + | + | + |
| Lactobacillus brevis | - | - | - |
| Pediococcus damnosus | - | - | - |
| Pectinatus frisingensis | n.b. | n.b. | + |
| Megasphera cerevisiae | n.b. | n.b. | + |

Beurteilt nach den Kriterien Trübungsentstehung und Gasbildung erfolgte bei allen Hefen unter allen Bedingungen Wachstum. Bei Saccharomyces diastaticus wurde jedoch nur Trübungsentstehung ohne begleitende Gasbildung beobachtet. Dies ist für eine gärende Hefe ungewöhnlich. Pectinatus frisingensis und Megasphera cerevisiae waren unter anaeroben Bedingungen in der Lage, Trübung zu entwickeln und bei Lactobacillus brevis und Pediococcus damnosus entwickelten sich keine Anzeichen für Wachstum.

Über die Inkubationszeit sind visuell die Parameter Trübungsentstehung und Gasentwicklung dokumentiert worden. Die beobachteten Ergebnisse sind im Folgenden dargestellt:

### 1.4. 1 Pediococcus brevis, Lactobacillus brevis, Megasphera cerevisiae, Pectinatus frisingensis

In keinem der beimpften Ansätze konnten entstehende Trübung oder Gasbildung beobachtet werden.

### 1.4.2 Schizosaccharomyces pombe

Bereits nach wenigen Tagen ist in einigen Ansätzen Gasbildung beobachtet worden. Allerdings konnte keine Regelmäßigkeit nach den Konzentrationen der variierten Parameter beobachtet werden. Nach einer Woche Inkubation war durchgängig die von den Durham-Röhrchen maximal zu erfassende Gasmenge gebildet und in einigen Ansätzen begann die Hefe zu sedimentieren. Nach zehn Tagen war die Hefe in allen Ansätzen sedimentiert.

### 1.4.3 Saccharomyces diastaticus

Diese Hefe bildete im Verlauf der ersten Woche leichte Trübungen, die in der zweiten Woche an Intensität zunahmen. Verzögert wurde die Trübungsbildung offensichtlich von den Alkoholkonzentrationen 6% und 6,5 %. Ebenso wurde auch bei dem pH-Wert 3,6 eine entstehende Trübung erst drei Tage nach Beobachtung von Trübungsbildung bei den höheren pH-Werten notiert. Bemerkenswert erschien, dass große Teile der entstehenden Zellmasse sich an der Flüssigkeitsoberfläche ansiedelten. Dies galt sowohl für die aerob als auch die anaerob bebrüteten Ansätze. In keinem Ansatz bildete die Hefe innerhalb von drei Wochen Gas. Im Verlauf der zweiten und dritten Woche sedimentierte die Hefe vollständig, bis auf die an der Flüssigkeitsoberfläche am Glas anhaftende Zellsubstanz.

Die mikroskopische Betrachtung der sowohl am Rand befindlichen als auch der am Boden sedimentierten Hefezellen zeigte einen großen Anteil an ungewöhnlich kleinen Zellen. Nach Ausstrich von geernteten kleinen Zellen auf Würzeagar wurden wieder normal große Zellen beobachtet. Daraus wird geschlussfolgert, dass Saccharomyces diastaticus bei Isomaltulose als einzige verfügbare Kohlenhydratquelle zu Kümmerwuchs neigt.

### 1.4.4 Saccharomyces cerevisiae MJJ 2

Der Zusatz von Alkohol in einer Konzentration von 6,5 % verzögerte die Bildung von Trübung bis zum Anfang der zweiten Woche, Gasbildung entstand erst zur Mitte der zweiten Woche, In niedrigeren Konzentrationen behinderte der Alkohol das Wachstum der Hefe offensichtlich nicht. Das Absenken des pH-Wertes blieb bis zu einem Wert von 3,8 ebenfalls ohne wachstumsbehindernden Effekt. Bei einem pH-Wert von 3,6 entstanden Gas und Trübung erst zur Mitte der zweiten Woche. Durch die Zugabe von Hopfen wurden Trübungsentstehung und Gasbildung ebenfalls bis in die zweite Inkubationswoche verzögert. Die Gasbildung erschien geringer als in den anderen Reihen. In den anaerob bebrüteten Ansätzen entwickelte sich Wachstumsaktivität langsamer als in den anaerob bebrüteten Proben. Nachdem sich im Lauf der dritten Woche die Hefe abgesetzt hatte, blieb das Volumen des gebildeten Gases hinter dem der aeroben Proben zurück.

### 1.4.5 Gesamtbetrachtung

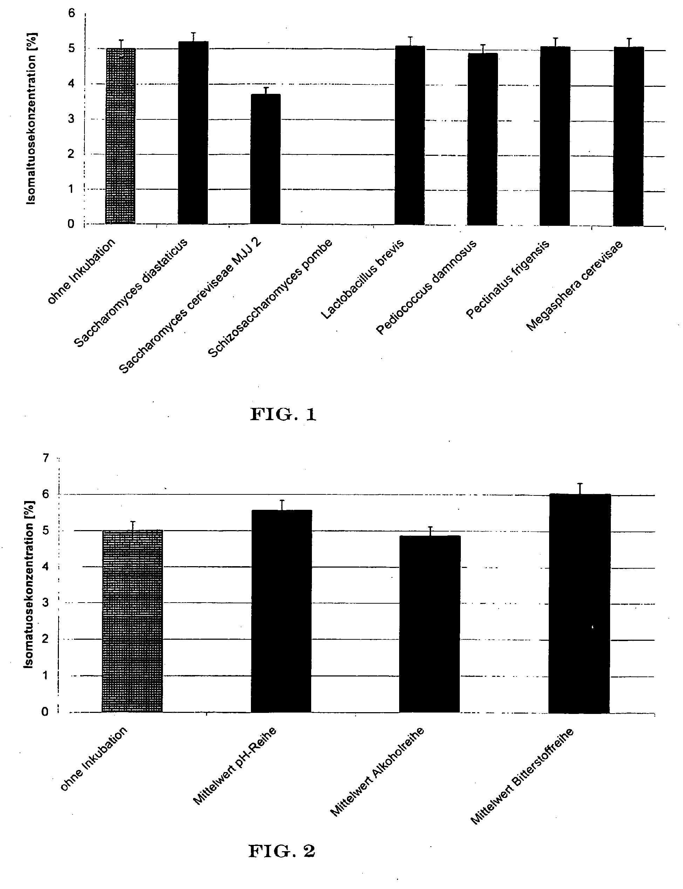

In Figur 1 sind die mittels DNS-Assay ermittelten Isomaltulosekonzentrationen ohne Inkubation und nach drei Wochen anaerober Inkubation ohne konservierende Faktoren, von allen Ansätzen dargestellt (Inkubation anaerob, ohne konservierende Faktoren, drei Wochen Inkubation bei 26 °C).

Mit Ausnahme der mit Schizosaccharomyces pombe und Saccharomyces cerevisiae MJJ 2 inkubierten Ansätze, liegen alle Werte in einem Schwankungsbereich von unter 5 % um die gemessene Konzentration der Modellösung ohne Inkubation.

Dies wird so gedeutet, dass nur die Hefen Saccharomyces cerevisiae MJJ 2 und Schizosaccharomyces pombe in der Lage waren, in anaerober Atmosphäre ohne zugesetzte Konservierungsfaktoren im betrachteten Zeitraum, die Isomaltulose abzubauen. Saccharomyces cerevisiae MJJ 2 reduzierte den Isomaltulosegehalt in der Modelllösung um 26 %, während Schizosaccharomyces pombe die Isomaltulose vollständig metabolisieren konnte.

Die untersuchten Bakterien wurden nur anaerob bebrütet, in keinem Ansatz wurde Isomaltuloseabbau festgestellt. Die Hefen wurden auch aerob inkubiert. Schizosaccharomyces pombe verstoffwechselte auch unter aeroben Bedingungen die Isomaltulose vollständig, bei allen Konservierungsparametern und in allen Konzentrationen.

Figur 2 zeigt mittels DNS-Methode gemessene Isomaltulosekonzentrationen in den mit Saccharomyces diastaticus inkubierten Proben (Mittelwerte der Reihen nach drei Wochen Inkubation bei 26 °C). Die Ergebnisse sind als Mittelwerte der verschiedenen Konservierungsfaktoren dargestellt.

Saccharomyces diastaticus zeigte auch bei aeroben Verhältnissen die Fähigkeit, die Isomaltulose zu metabolisieren. In dieser Messreihe traten Abweichungen in den gemessenen Konzentrationen auf, die nicht in einen Fehlerbereich von 5 % passen. Bei gemessenen Konzentrationen von mehr als 5 % Isomaltulose wird davon ausgegangen, dass über die Inkubationszeit geringe Anteile des Wassers aus der Lösung verdunstet sind. Daher sind diese Messwerte nur als Trend zu betrachten.

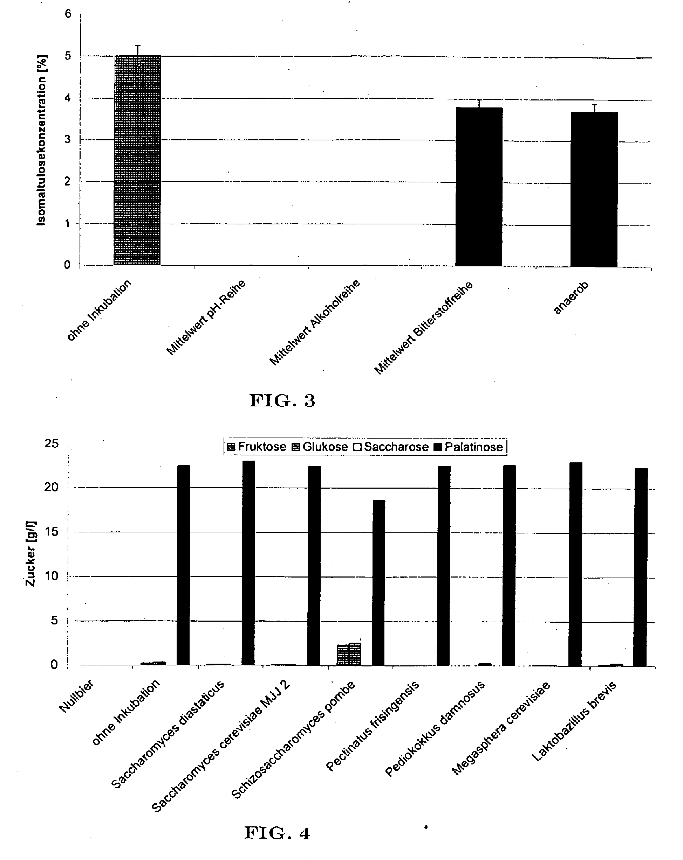

Figur 3 zeigt mittels DNS-Methode gemessene Isomaltulosekonzentrationen in den mit Saccharomyces cerevisiae MJJ 2 inkubierten Proben (Mittelwerte der Selektivfaktoren-Reihen aerob inkubiert, verglichen mit anaerober Inkubation bei 26 °C).

Saccharomyces cerevisiae MJJ 2 zeigte bei aerober Atmosphäre bessere Isomaltuloseverwertung als bei Abwesenheit von Sauerstoff. In der Figur ist klar zu erkennen, dass die Variation des pH-Wertes und Zugabe von Alkohol, in dem hier untersuchten Rahmen, nicht in der Lage sind, diese Hefe bei der Metabolisierung von Isomaltulose zu behindern. Jedoch ist die Isomaltuloseverwertung in Gegenwart von Hopfenbitterstoffen und unter Abwesenheit von Sauerstoff offensichtlich für Saccharomyces cerevisiae MJJ 2 erschwert.

### Beispiel 2: Kommerzielles Diätbier wird mit Isomaltulose versetzt

Kommerziellem Diätbier (hier: Henninger Diät-Pils) wurde Isomaltulose in einer Menge zugesetzt, so dass der Gehalt des realen Restextraktes auf 4 % g/g betrug. In diesem Bier liegen alle biereigenen Selektivfaktoren kombiniert vor. Das isomaltulosehaltige Diätbier wurde daraufhin mit den Testmikroorganismen (Beispiel 1, Tabelle 2) sieben Tage bei 26 °C inkubiert. Die Versuchsreihe wurde analytisch begleitet, indem die Würzen und Biere nach den Vorschriften für Brautechnische Analysenmethoden der Mitteleuropäischen Analysenkommission e.V. (MEBAK) analysiert wurden und zusätzlich die Saccharidspektren gemessen wurden. Die Isomaltuloseverwertung wurde mittels Analyse des Saccharid- und Säurespektrums ermittelt, da in der Reallösung Bier neben Isomaltulose auch noch weitere reduzierende Zucker vorkommen. Vor der Analyse wurden die Testmikroorganismen mittels Membranfiltration (0,45 µm) abgetrennt, um einen stabilen Zustand herzustellen. Die Messung des Säure- und Saccharidspektrums erfolgte mitttels HPLC/ GC-Methode in an sich bekannter Weise.

In Tabelle 4 ist dargestellt, in welchen Ansätzen anhand von Trübungsbildung Wachstum beobachtet wurde (- = keine Trübung, + = Trübung, ++ = starke Trübung).

**Tabelle 4:**

| Diätbier plus Isomaltulose beimpft mit: | Trübung (nach 7 Tagen) |
|---|---|
| Saccharomyces diastaticus | + |
| Saccharomyces cerevisiae MJJ 2 | ++ |
| Schizosaccharomyces pombe | + |
| Pectinatus frisingensis | ++ |
| Pediococcus damnosus | - |
| Megasphera cerevisiae | ++ |
| Lactobacillus brevis | - |

Innerhalb des beobachteten Zeitraumes zeigten Pediococcus damnosus und Lactobacillus brevis kein Wachstum (Trübung der Probe), Schizosaccharomyces pombe und Saccharomyces diastaticus erzeugten nur leichte Trübung. Saccharomyces cerevisiae MJJ 2, Pektinatus frisingensis und Megasphera cerevisiae waren in der Lage starke Trübungen zu entwickeln.

Figur 4 zeigt die Ergebnisse der Zuckerspektrumanalyse der Diätbiere nach sieben Tagen Inkubation bei 26 °C.

Im Nullbier (=kommerzielles Diätbier ohne Isomaltulosezusatz) war keiner der analysierten Zucker zu finden. Es liegen dort also keine verwertbaren niedermolekularen Zucker vor. Im nicht inkubierten aber mit Isomaltulose versetzten Diätbier sind neben 22,5 g/l Isomaltulose nur in Spuren Fruktose und Glukose gefunden worden. In den inkubierten Bieren, mit Ausnahme des mit Schizosaccharomyces pombe inkubierten Bieres, sind im Rahmen des Mess- und Einwaagegenauigkeiten die gleichen Isomaltulosekonzentrationen wie im nicht inkubierten Bier gefunden worden (Abweichungen <5 %). Ebenfalls nur im mit Schizosaccharomyces pombe inkubierten Bier sind messbare Konzentrationen an Glukose und Fruktose gebildet worden.

In Tabelle 5 sind die Isomaltulosekonzentrationen der einzelnen Biere und das entsprechende Verhältnis zur Ausgangskonzentration dargestellt.

**Tabelle 5:**

| Probe | Isomaltulosekonzentration nach Inkubation (%) |
|---|---|
| Kommerzielles Diätbier, unverändert | 0 |
| Kommerzielles Diätbier + Isomaltulose (= H+P) | 100 |
| H+P inkubiert mit Saccharomyces diastaticus | 100 |
| H+P inkubiert mit Saccharomyces cerevisiae MJJ 2 | 100 |
| H+P inkubiert mit Schizosaccharomyces pombe | 83 |
| H+P inkubiert mit Pectinatus frisingensis | 100 |
| H+P inkubiert mit Pediococcus damnosus | 100 |
| H+P inkubiert mit Meqasphera cerevisiae | 100 |
| H+P inkubiert mit Lactobacillus brevis | 100 |

Nach der Abtrennung der Mikroorganismen durch Membranfiltration war in allen beimpften Bieren noch die Ausgangskonzentration an Isomaltulose vorhanden. Einzige Ausnahme war das Bier, welches mit Schizosaccharomyces pombe inkubiert wurde. Hier erfolgte eine Abnahme um 17 % und es wurden auch nur in diesem Fall messbare Konzentrationen an Glukose und Fruktose gefunden, den Spaltprodukten der Isomaltulose. Das anhand von Trübungsbildung fest gestellte Zellwachstum erfolgte demnach nur im Fall der Hefe Schizosaccharomyces pombe auf der Grundlage der Isomaltulose.

Zudem wurden die pH-Werte der inkubierten Biere gemessen. Alle Werte lagen bei 4,5 oder 4,6. Dieses Ergebnis zusammen mit der Analyse des Säurespektrums der Proben zeigt, dass von keinem der in den Proben inkubierten Mikroorganismen Säure gebildet wurde und belegt zusätzlich speziell für die Lactobazillen, dass kein Wachstum stattgefunden hat. Ein wichtiger Faktor bei Getränkeverderb durch Lactobazillen ist die Bildung der Milchsäure, die das Aroma des jeweiligen Getränks stark schädigen kann.

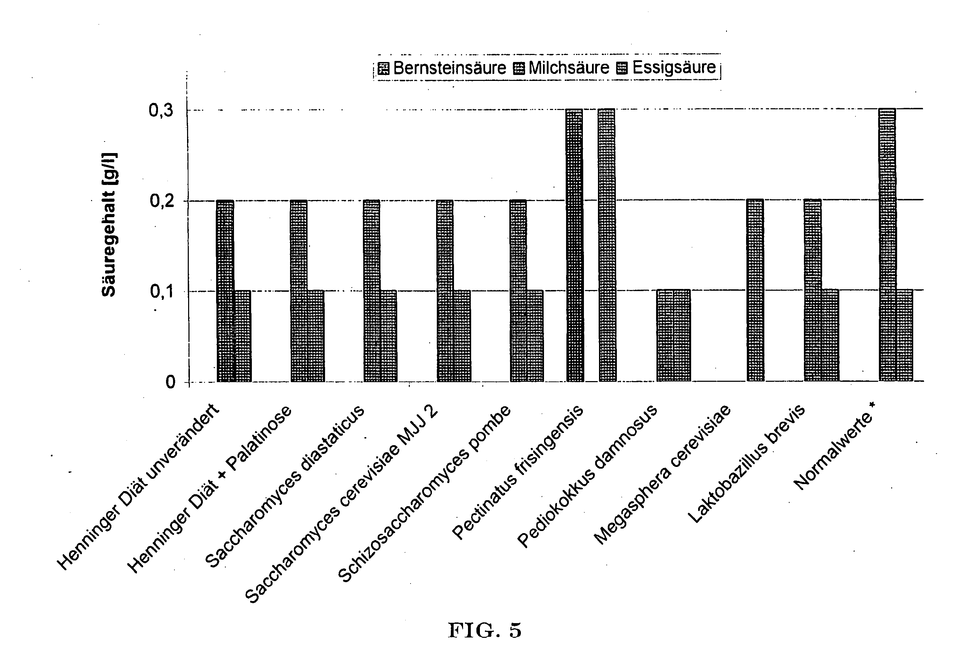

In Figur 5 finden sich die Ergebnisse der Säurespektrumanalyse. Die Gehalte an den gemessenen Säuren bewegen sich nicht in abnormal hohen Konzentrationen. Nur in der mit Pectinatus frisingensis inkubierten Probe finden sich gegenüber den nicht inkubierten Proben leicht erhöhte Gehalte an Bernstein- und Essigsäure. Die Werte sind mit 0,3 g/l gering. Betreffs des Gehaltes an Milchsäure (Laktat) ist festzustellen, dass dieser in den mit Pectinatus frisingensis, Pediococcus damnosus und Megasphera cerevisiae inkubierten Proben im Vergleich zur Nullprobe abgenommen hat. Offenbar wurde in Ermangelung verwertbaren Substrats das Laktat verstoffwechselt, ein in der Literatur beschriebener Vorgang, bei dem Laktat als Substrat für die Glukoneogenense genutzt wird. In der mit Lactobacillus brevis inkubierten Probe wurde der gleiche Gehalt wie in den nicht inkubierten Proben gemessen. Es wurde also weder Laktat verstoffwechselt, noch neues durch den Stoffwechsel des Bakteriums gebildet. Dies wird als weiteres Indiz für fehlende Stoffwechselaktivität dieses Bakteriums gewertet.

### Beispiel 3 (nicht erfindungsgemäß): Herstellung von "Diätbier"

Unter "Diätbier" wird Bier verstanden, bei dem im fertigen Produkt idealerweise nur noch Isomaltulose als Kohlenhydrat vorliegt.

Da es zur Erzeugung von Diätbieren von entscheidender Wichtigkeit ist, intensiv zu maischen, wurde exemplarisch ein Maischverfahren benutzt, das die Temperaturoptima der stärkeabbauenden Enzyme des Malzes sehr stark betont:
- Einmaischen bei 50 °C, 15 min Rast
- Aufheizen auf 55 °C (1 °C/min), 30 min Rast
- Aufheizen auf 62 °C (1 °C/min), 45 min Rast
- Aufheizen auf 65 °C (1 °C/min), 45 min Rast
- Aufheizen auf 68 °C (1 °C/min), 30 min Rast
- Aufheizen auf 70 °C (1 °C/min), 30 min Rast
- Aufheizen auf 72 °C (1 °C/min), 20 min Rast
- Aufheizen auf 78 °C (1 °C/min)
- Abmaischen

Die Malzschüttung bestand zu 100 % aus Pilsener Malz, Hopfen wurde in einer Gabe 90 mg α-Säure/l Ausschlagwürze gegeben, bestehend aus CO₂-Extrakt.

Ein Teil wurde als Vergleichsbeispiel ohne Isomaltulosezugabe hergestellt und verkostet und analysiert. Dieses Bier stellt das "Nullbier" dar. Einem anderen Teil des Bieres wurde die Isomaltulose während der Kochung zugegeben, wodurch die Isomaltulose während der Hauptgärung im Bier vorhanden war.

Die Hauptgärung erfolgte jeweils drucklos mit der untergärigen Hefe Saccharomyces carlsbergensis MJJ 11, bei 15 bis 19 °C. Zum Ende der Gärung wurde die Temperatur angehoben, um den Extraktgehalt der Würze möglichst weitgehend abzubauen. Das Schlauchen erfolgte nach Erreichen des vorher bestimmten Endvergärungsgrades.

Die Versuchsreihe wurde analytisch begleitet, indem die Würzen und Biere nach den Vorschriften für Brautechnische Analysenmethoden der Mitteleuropäischen Analysenkommission e.v. (MEBAK) analysiert wurden und zusätzlich die Saccharidspektren gemessen wurden. Bezüglich des Aromas der Biere wurden die Gehalte an ausgewählten aromaaktiven Estern und höheren Alkoholen sowie Acetaldehyd gemessen. Weiterhin wurden Säuregehalte der fertigen Biere analytisch erfasst und die fertigen Biere sowohl untereinander vergleichend als auch bewertend verkostet.

Bei dem erfindungsgemäß hergestellten Diätbier zeigt sich keine Beeinträchtigung sensorischer Charakteristika wie Qualität des Geruchs, Qualität des Geschmacks, Vollmundigkeit, Rezenz und Qualität des bitteren Geschmacks (Bittere). In vielen Fällen wurde das erfindungsgemäße Diätbier bekanntem Diätbier (hier: Henninger Diät-Pils) vorgezogen.

### Beispiel 4 (nicht erfindungisgemäß): Herstellung von "alkoholreduziertem Bier"

Teile der Stammwürze werden durch Isomaltulose substituiert, so dass bei "normaler" Vergärung verglichen mit einem herkömmlichen Vollbier weniger Alkohol entsteht. Bei dem zuvor in Beispiel 3 beschriebenen Prozess wurde so gemaischt, dass ein möglichst hoher Vergärungsgrad realisiert werden kann. Durch die vollständige Vergärung der erreichbaren Kohlenhydrate entsteht naturgemäß ein hoher Alkoholgehalt. Daher wurde in diesem Beispiel ein Maischprogramm benutzt, welches kürzer und weniger intensiv ist und daher die Kohlenhydrate des Malzes nicht vollständig in vergärbare Zucker umwandelt:
- Einmaischen bei 62 °C; keine Rast
- Aufheizen auf 66 °C (1 °C/min), 30 min Rast
- Aufheizen auf 72 °C (1 °C/min), 20 min Rast
- Aufheizen auf 78 °C
- Abmaischen

Durch Ersetzten von etwa einem Viertel der Stammwürze mit Isomaltulose zum Zeitpunkt der Kochung soll das verfügbare Substrat für die Hefe verringert werden. So kann ein Bier hergestellt werden, das verglichen mit herkömmlichen Vollbieren weniger Alkohol enthält. Die Hopfengabe erfolgte wie bei den Diätbieren auf 90 mg α-Säure pro Liter Ausschlagwürze.

Die Hauptgärung erfolgte drucklos mit der untergärigen Hefe Saccharomyces carlsbergensis MJJ 11, bei 12 °C. Das Schlauchen erfolgte bei einem Extraktgehalt der etwa 1,5% über dem erwarteten Extrakt bei Endvergärung lag.

Die begleitende Analytik (nach MEBAK und aromaspezifisch) entsprach Beispiel 3.

Wie in Beispiel 3 zeigt das erfindungsgemäß hergestellte alkoholfreie Bier keine Beeinträchtigung der sensorischen Charakteristika. In vielen Fällen wurde das erfindungsgemäße alkoholfreie Bier bekanntem alkoholfreiem Bier vorgezogen.

### Beispiel 5 (nicht erfindungsgemäß): Herstellung von "Malztrunk"

Da ein Malztrunk mit nur sehr unvollständiger Vergärung hergestellt werden sollte, war es nicht nötig, ein Maischprogramm für einen möglichst hohen Vergärungsgrad zu benutzen. Es wurde das gleiche Maischprogramm wie in Beispiel 4 benutzt.

Um die Farbe des Produktes so dunkel wie für Malzbiere üblich einzustellen, wurde folgende Malzmischung benutzt:
- 40 % Pilsener Malz
- 30 % Münchener Malz
- 20 % Cara Malz
- 10 % Farbmalz

Die Stammwürze wurde so eingestellt, dass die Hälfte des Extraktes aus dem Malz gewonnen wurde, während die andere Hälfte in Form von Isomaltulose (Kristallzucker) zur Kochung dazugegeben wurde. Insgesamt wurde auf 12 % Stammwürze eingestellt. Die Hopfengabe erfolgte auf 15 mg α -Säure/l Ausschlagwürze.

Der Malztrunk wurde nach der Heißtrubabtrennung in ein Keg gefüllt und nach Abkühlung mit wenig Hefe (Saccharomyces carlsbergensis MJJ 11) versetzt. Nach einem halben Tag Kontaktzeit bei 0 °C wurde die Hefe durch Umdrücken auf ein anderes Lagergefäß weitgehend abgetrennt. Diese Art der Vergärung ist angelehnt an das sogenannte Kältekontaktverfahren. Nach zwei Wochen Lagerung folgte die Filtration und Abfüllung.

Die erhaltenen Malztrunke wurden sowohl sensorisch als auch analytisch (nach MEBAK und aromaspezifisch) wie in Beispiel 3 und 4 bewertet und mit kommerziellen Malzbieren verglichen.

Wie in den Beispielen 3 und 4 zeigt auch der erfindungsgemäß hergestellte Malztrunk keine Beeinträchtigung der sensorischen Charakteristika. In vielen Fällen wurde der erfindungsgemäße Malztrunk bekannten, kommerziellen Malzbieren vorgezogen.

### Beispiel 6: Herstellung von Biermischgetränken

### 6.1 Ansätze

Es wurden zwölf verschiedene Biermischgetränke aus Bier- und Limonadenkomponente im 10 I-Maßstab hergestellt. Dabei wurden jeweils die Bierkomponente und das Süßungsmittel im Limonadenanteil variiert.

Für die Versuche wurden die folgenden vier verschiedenen Biertypen ausgewählt (auch mit Hinblick auf noch folgende Versuche zu biologischen Stabilität der Getränke):
- Ein Pilsener, um die handelsüblichen Biermischgetränke zu simulieren.
- Ein Diätbier, mit sehr geringem Gehalt an Restkohlenhydraten. Durch das weitgehende Fehlen von eigenen verwertbaren Kohlenhydraten wird hier das verwendete Süßungsmittel des Limonadenanteils entscheidend für die Vollmundigkeit. Ferner fehlt biereigenes Substrat bei eventuellen Kontaminationen.
- Ein alkoholfreies Pilsener. Das hiermit hergestellte Biermischgetränk enthält den Selektivfaktor Alkohol nicht, ebenso fehlt der Einfluss des Alkohols auf die Vollmundigkeit des Biermischgetränkes.
- Ein Doppelbock. Dieser besitzt im Vergleich zu Vollbieren einen erhöhten Alkoholgehalt und auf der anderen Seite einen erhöhten Restextraktgehalt, der für eventuelle Kontaminanten zusätzlich zum Süßmittel der Limonade Substrat darstellt.

Der Limonadenanteil wurde aus einem Grundstoff mit Zitronen-Limetten Aroma der Firma Wild, Art.-Nr. 3-110050331 und Zitronensäure hergestellt. Als Süßungsmittel wurden eingesetzt:
- Saccharose,
- Isomaltulose,
- Süßstoffmischung der Firma Wild (Sweet Up; bestehend aus Cyclamat, Saccharin, Aspartam und Acesulfam K).

Die Süßstoffmischung wurde gewählt, da dieses Produkt im großtechnischen Maßstab bei der Herstellung von Biermischgetränken eingesetzt wird, und somit praxisnah ist. Zudem werden durch die Mischung der Süßstoffe geschmackliche Nachteile der einzelnen Komponenten kompensiert. Zitronensäure wurde zur Säuerung genutzt.

Die abgewogenen Zutaten wurden mit Brauwasser in Lösung gebracht.

Die Variation der verschiedenen Süßungsmittel und der Biere ergab folgende Versuchsansätze von Biermischgetränken:

**Tabelle 6:**

| 12 Versuchsansätze für Bier-Limonaden-Mischgetränke | | | |
|---|---|---|---|
| Pilsener | Isomaltulose | Diät-Pilsener | Isomaltulose |
| | Saccharose | | Saccharose |
| | Süßstoff | | Süßstoff |

| alkoholfr. Pilsener | Isomaltulose | Doppelbock | Isomaltulose |
|---|---|---|---|
| | Saccharose | | Saccharose |
| | Süßstoff | | Süßstoff |

Saccharose und Süßstoffmischung wurden in an sich bekannter Weise dosiert und entsprachen den Empfehlungen der Fa. Wild Flavours. Die Isomaltulose wurde dosiert, indem nach Verkostung die gleiche Süßkraft wie in den anderen Limonaden eingestellt wurde. Bier und Limonade wurden zusammen in ein 30 I - KEG gefüllt, gemischt und anschließend karbonisiert. Die Karbonisierung erfolgte durch Einleiten von CO₂ durch den Flüssigkeitsweg des Zapfkopfes. Zur Bindung von CO₂ wurden die mit 1,8 bar Gasdruck beaufschlagten Fässer bei 0°C 24 für Stunden gelagert. Der Fassdruck betrug nach der Kaltlagerung noch 0,8 - 0.9 bar.

### 6.2 Auswertung

Dreiecksverkostungen mit Bevorzugung (nach MEBAK) wurden mit 10 Verkostern durchgeführt. Bei jeweils gleichem Grundbier wurden die Varianten mit unterschiedlichen Süßungsmitteln gegeneinander verkostet. Es sollte herausgefunden werden, welches Süßungsmittel sensorisch bevorzugt wird. Die abweichende Probe sollte festgestellt und die jeweilige Bevorzugung vermerkt werden. Nur bei richtiger Zuordnung der abweichenden Probe wurde die Bevorzugung auch gewertet.

Weiter wurden bewertende Verkostungen mit den hergestellten Biermischgetränken durchgeführt. Hierbei fand ein eigenes Schema Anwendung. Es sollte durch die Bewertung eine Differenzierung der Geschmackseindrücke in Abhängigkeit der verschiedenen Süßungsmittel im Biermischgetränk versucht werden. Von entscheidender Bedeutung war der Geschmackseindruck Süße, welcher wie auch die anderen Charakteristiken als positiv sowie negativ bewertet werden konnte. Neben der Süße gab es folgende Bewertungskriterien:

Vollmundigkeit, Bittere, Fruchtigkeit, Säure, Harmonie (Süß-Säure-Ratio) und Erfrischung. Die Urteile hatten Abstufungen von 1 bis 5, wobei "3" den anzustrebenden Wert darstellte. Werte darüber waren zu intensive Geschmackseindrücke wie z. B. "zu süß". Werte unter "3" waren zu geringe Geschmackseindrücke wie z. B. "nicht süß genug". Somit war es dem Verkoster auch möglich die Qualität der einzelnen Kriterien genauer beurteilen. Die Bewertung der Erfrischung wurde nur von 1 bis 3 abgestuft, hierbei bedeutet 3 "erfrischend" und 1 "nicht erfrischend". Abschließend wurde die Gesamtqualität bewertet: Ganze Zahlen von 1 (= schlechtestes Ergebnis) bis 5 (= bestes Ergebnis)).

### 6.3 Ergebnisse

### 6.3.1 chemisch-technische Analysen

Nachfolgend sind die Analysen der Einzelkomponenten der Limonaden dargestellt.

**Tabelle 7:**

| Analyse des zum Herstellen des Limonadenanteils benutzten Wassers | | |
|---|---|---|
| Gesamthärte | dH | 0,5 |
| Calcium-Härte | dH | 0 |
| Restalkalitat | dH | 0,924 |
| pH-Wert | | 6,7 |
| p-Wert | | 0 |
| m-Wert | | 0,33 |
| Leitfähigkeit | µS / cm | 47 |

Das Wasser zeichnet sich nach der Aufbereitung durch eine sehr geringe Härte aus, die für die Herstellung von gesäuerten Biermischgetränken idealerweise benötigt wird.

**Tabelle 8:**

| Analysen der verwendeten Grundbiere | | | | | |
|---|---|---|---|---|---|
| | | Pilsener | Diät-Pilsener | Alkoholfreies Pilsener | Doppelbock |
| Stammwürze | Gew % | 11,23 | 9,32 | 5,27 | 18,65 |
| Alkoholgehalt | Vol % | 5,02 | 4,83 | 0,41 | 8,46 |
| Extrakt, scheinbar | Gew % | 1,76 | 0,01 | 4,46 | 3,47 |
| pH-Wert | | 4,35 | 4,56 | 4,35 | 14,72 |
| Bittereinheiten | BE | 31 | 19 | 26 | 25 |

Klar ist zu erkennen, dass im Gegensatz zum Pilsener Bier das Diät-Bier erheblich weniger scheinbaren Restextrakt (Kohlenhydrate) enthält, das alkoholfreie Bier bei ähnlichem Restextrakt weniger Alkohol und der Doppelbock sowohl deutlich mehr Alkohol als auch Restextrakt beinhaltet. Das Diät-Bier enthält weniger Bittereinheiten, dies könnte sich bei einer Kontamination mit bierschädlichen Mikroorganismen nachteilig auswirken.

Die gemessenen pH-Werte sind bei dem Pilsener und dem alkoholfreien Pilsener als am niedrigsten gemessen worden, der Doppelbock wies den höchsten Wert auf.

Die folgenden Tabellen geben die Analysen der fertigen Biermischgetränke wieder.

**Tabelle 9:**

| Analyse der Biermischgetränke mit dem Pilsener als Grundbier | | | | |
|---|---|---|---|---|
| | | Isomaltulose | Saccharose | Süßstoff |
| Extrakt, scheinbar | Gew % | 11,20 | 4,91 | 0,97 |
| Alkohol | Vol % | 2,60 | 2,68 | 2,53 |
| pH-Wert | | 3,39 | 3,39 | 3,41 |
| Bittereinheiten | BE | 15 | 15 | 15 |

**Tabelle 10:**

| Analyse der Biermischgetränke mit dem Diät-Bier als Grundbier | | | | |
|---|---|---|---|---|
| | | Isomaltulose | Saccharose | Süßstoff |
| Extrakt, scheinbar | Gew % | 10,27 | 4,01 | 0,14 |
| Alkohol | Vol % | 2,52 | 2.54 | 2,49 |
| pH-Wert | | 3,46 | 3,47 | 3,48 |
| Bittereinheiten | BE | 12 | 11 | 12 |

**Tabelle 11:**

| Analyse der Biermischgetränke mit dem alkoholfreien Bier als Grundbier | | | | |
|---|---|---|---|---|
| | | Isomaltulose | Saccharose | Süßstoff |
| Extrakt, scheinbar | Gew % | 12,53 | 6,26 | 2,40 |
| Alkohol | Vol % | 0,04 | 0,06 | 0,05 |
| pH-Wert | | 3,49 | 3,52 | 3,52 |
| Bittereinheiten | BE | 13 | 13 | 13 |

**Tabelle 12:**

| Analyse der Biermischgetränke mit dem Doppelbock als Grundbier | | | | |
|---|---|---|---|---|
| | | Isomaltulose | Saccharose | Süßstoff |
| Extrakt, scheinbar | Gew % | 12,55 | 6,26 | 2,41 |
| Alkohol | Vol % | 3,85 | 3,79 | 3,91 |
| pH-Wert | | 3,81 | 3,82 | 3,81 |
| Bittereinheiten | BE | 12 | 11 | 12 |

Deutlich sind die durch die unterschiedlichen Grundbiere bedingten Unterschiede in den Analysenwerten zu erkennen. Die pH-Werte der Biermischgetränke liegen alle unter denen der Grundbiere, bedingt durch die Zitronensäure des Limonadenanteils.

Die Bittereinheiten sind durch die Verdünnung mit der Limonade in etwa halb so hoch wie die der Grundbiere. Durch diese "Halbierung" verringert sich der Einfluss der niedrigeren Ausgangs-Bittere des Diätbieres, die Bitterwerte der gemischten Getränke liegen alle in einer ähnlichen Größenordnung. Die Alkoholgehalte der Biermischgetränke sind entsprechend der Grundbiere gemessen worden; die mit dem alkoholfreien Bier hergestellten Getränke enthalten unter 0,1 Vol.-% Alkohol, sind daher wie das Grundbier als alkoholfrei anzusehen. Die Getränke mit verwendetem Pilsener oder Diät-Bier weisen Alkohol von etwa 2,5 bzw. knapp 2,7 Vol.-% auf und der Wert der mit dem Doppelbock hergestellten Mischgetränke beträgt knapp 4 Vol.-%. Dieser Wert ähnelt denen von normalen reinen Biergetränken. Die gemessenen Extraktgehalte sind ebenfalls den Grundbieren entsprechend, den höchsten Extraktgehalt weisen jeweils die mit Isomaltulose gesüßten Getränke auf, bedingt durch die erhöhte Zugabe gegenüber der Saccharose. Die saccharosehaltigen Getränke weisen die zweithöchsten Extrakte auf, die mit den Süßstoffen gesüßten Mischungen die niedrigsten. Insgesamt besitzen die auf Diät-Bier basierenden Getränke den wenigsten Extrakt, gefolgt von den Mischgetränken mit dem Pilsener Bier. Interessanterweise bedingten die Grundbiere Doppelbock und das alkoholfreie Bier in etwa gleiche Restextraktgehalte, da das alkoholfreie Bier offenbar noch unvergorenen Restextrakt enthielt. Aus der Diabetikereignung des Diätbieres resultiert auch jeweils für die Mischgetränke mit der Süßstoffmischung (nahezu kein Brennwert) und der Isomaltulose (niedriger glykämischer Index) eine Diabetikereignung.

### 6.3.2 Verkostung

In den Tabellen sind die Ergebnisse der Dreiglasverkostungen mit Zuordnung dargestellt, in denen bei gleichem Grundbier die Bevorzugung der einzelnen Süßungsmittel erfasst werden sollte.

Die Verkostungen wurden von jeweils zehn Personen durchgeführt; da die drei Süßungsmittel Gegenstand der Prüfung waren, ergaben sich insgesamt dreißig auszuwertende Verkostungen pro Grundbier.

**Tabelle 13:**

| Dreiglasverkostung mit Zuordnung, Biermischgetränke mit verschiedenen Grundbieren (15 richtige Zuordnungen erforderlich für Signifikanzniveau von 95 % (α = 0,05) | | | | |
|---|---|---|---|---|
| | Pilsener | Diät-Pilsener | Alkoholfreies Pilsener | Doppelbock |
| Isomaltulose bevorzugt | 5 | 8 | 8 | 9 |
| Saccharose bevorzuqt | 2 | 5 | 9 | 7 |
| Süßstoffe bevorzugt | 8 | 4 | 2 | 1 |
| Richtige | 15 | 17 | 19 | 17 |
| alpha (0,05) | 15 | 15 | 15 | 15 |

Bei Biermischgetränk mit Pilsener als Grundbier sind 15 Verkostungen richtig zugeordnet worden, die verschiedenen Biermischgetränke sind daher abhängig vom verwendeten Süßungsmittel signifikant unterschiedlich. Von den 15 richtigen Zuordnungen wurde 8 mal das süßstoffhaltige Getränk bevorzugt, 5 mal dasjenige mit Isomaltulose. 2 Verkoster bevorzugten das mit Saccharose gesüßte Biermischgetränk mit Pilsener als Grundbier.

Bei Biermischgetränk mit Diät-Bier als Grundbier wurde das isomaltulosehaltige Getränk am häufigsten bevorzugt, das süßstoffhaltige Biermischgetränk wurde am wenigsten oft als das Beste empfunden.

19 Verkoster des mit alkoholfreiem Bier gemischtem Biergetränk ordneten in der Dreiglasverkostung die übereinstimmenden Proben richtig zu, somit wurden 19 Bewertungen ausgewertet. Bei der Verwendung von alkoholfreiem Pilsener als Grundbier wurden die Süßungen durch die beiden Zucker ähnlich oft bevorzugt, beide wurden als deutlich besser als die Süßstoffmischung empfunden.

17 Bewertungen für das mit Bockbier gemischte Biergetränk wurden zur Auswertung herangezogen. Als am angenehmsten wurde die Süßung mit Isomaltulose empfunden, darauf folgte Saccharose. Nur ein Verkoster empfand die Süßung mit Süßstoffen bei diesem Grundbier als am angenehmsten.

Insgesamt wurden bei den vier verschiedenen Grundbieren die Zucker Isomaltulose und Saccharose in etwa gleich oft als die angenehmste Süßung empfunden (Isomaltulose wurde etwas häufiger bevorzugt), die Verwendung der Süßstoffmischung wurde klar am seltensten bevorzugt.

### 6.3.2.1 Aromaprofile

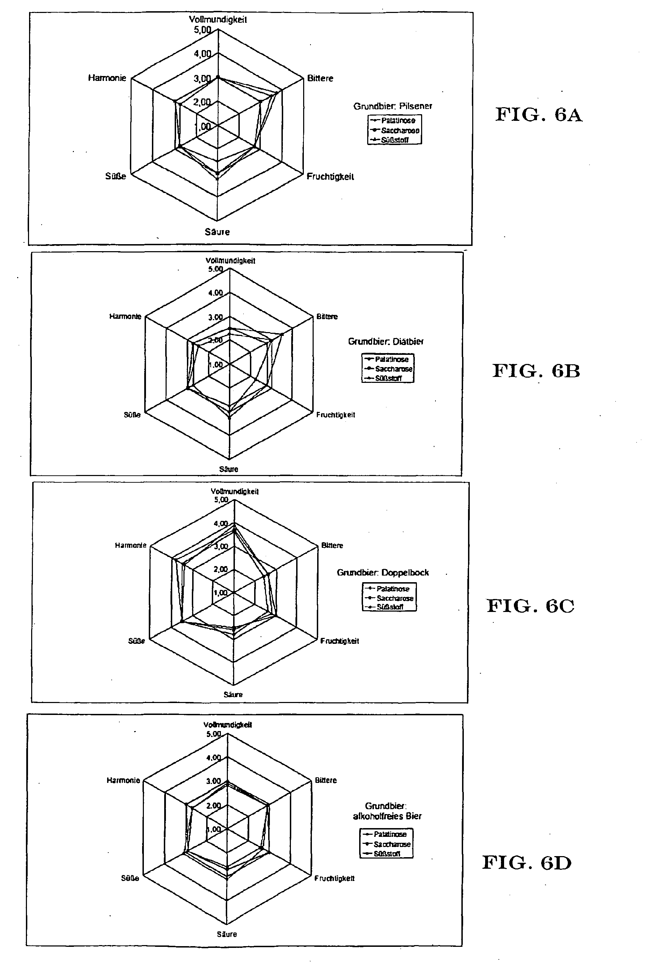

In Figur 6 sind die Ergebnisse der bewertenden Verkostungen dargestellt.

Die Aromaprofile der verschiedenen Biermischgetränke mit Pilsener als Grundbier (Figur 6a) ähneln sich sehr. Bemerkenswerte Unterschiede sind bei den Parametern Bittere und Säure zu erkennen. Hier erhielt jeweils das Getränk, welches mit Süßstoffen gesüßt wurde, Werte, die über das Optimale hinausgehen. Die Süßung mit den Zuckern Saccharose und Isomaltulose kompensiert diese Geschmackseindrücke offensichtlich effektiver als die Süßstoffmischung.

Auch bei Biermischgetränken mit Diät-Pilsener als Grundbier (Figur 6b) sind die Aromaprofile ähnlich. Wieder kommen die Geschmackseindrücke Bittere und Säure bei der Süßung mit Süßstoffen am stärksten zur Geltung, am wenigsten intensiv sind diese Parameter bei den mit Isomaltulose gesüßten Getränken wahrgenommen werden. Das mit Saccharose gesüßte Bier erhielt knapp die schlechteste Bewertung beim Parameter Vollmundigkeit. Insgesamt ist die Vollmundigkeit erwartungsgemäß deutlich schlechter bewertet worden als bei den Biermischgetränken mit dem Grundbier Pilsener.

Bei Biermischgetränken alkoholfreien Pilsener als Grundbier (Figur 6c) sind kaum erwähnenswerte Unterschiede im Aromaprofil festgestellt worden. Das mit Isomaltulose gesüßte Bier erhielt leicht bessere Benotungen bei den Parametern Fruchtigkeit, Vollmundigkeit und Harmonie. Der Säureeindruck wurde bei der Süßstoffanwendung am stärksten wahrgenommen, allerdings war auch der Süßeindruck hier am stärksten ausgeprägt, vereinzelt wurde der Süßeindruck als zu stark wahrgenommen.

Bei den Ergebnissen der bewertenden Verkostung von Biermischgetränken mit Doppelbock als Grundbier ist zu erkennen, dass sich die Aromaprofile der Getränke mit diesem Grundbier recht deutlich von denen der anderen Grundbiere unterscheiden. Sowohl die Vollmundigkeit und die Harmonie als auch der Süßeindruck gehen hier über die Idealnote 3 hinaus, sind also zu hervorstechend oder abweichend vom Ideal bewertet worden. Die Bittere hingegen ist deutlich geringer wahrgenommen worden, obwohl das Grundbier höhere Bittereinheiten besaß, als vergleichsweise das Diät-Bier. Der Aromaeindruck des verwendeten Bockbieres dominiert hier offensichtlich den Limonadenanteil und bedingt schlechtere Bewertungen des Mischgetränke als bei den anderen Grundbieren.

### 6.3.2.2 Erfrischungseffekt und Gesamtqualität

Weiterhin bewertet wurden der Erfrischungseffekt, als eines der integralen Merkmale eines Biermischgetränkes, sowie die Gesamtqualität. In Tabelle 14 sind die Ergebnisse dieser Bewertungen dargestellt.

**Tabelle 14:**

| | | Erfrischungseffekt | sensorische Gesamtqualität |
|---|---|---|---|
| Pilsener | Isomaltulose | 2,5 | 3,75 |
| | Saccharose | 2,75 | 3,5 |
| | Süßstoff | 2,75 | 3,75 |
| Diät | Isomaltulose | 2,75 | 3,75 |
| | Saccharose | 2,5 | 3,5 |
| | Süßstoff | 2,5 | 2,75 |
| alkoholfreies | Isomaltulose | 2,4 | 3,8 |
| Pilsener | Saccharose | 2,3 | 3,5 |
| | Süßstoff | 2,2 | 3,5 |
| Doppelbock | Isomaltulose | 1,7 | 3,3 |
| | Saccharose | 2,1 | 3,4 |
| | Süßstoff | 1,7 | 2,8 |

Die Biermischgetränke mit dem Pilsener als Grundbier wurden mit dem höchsten Wert bei diesem Bewertungsparameter eingestuft. Die Getränke basierend auf dem Doppelbock hingegen wurden als am wenigsten erfrischend eingestuft. Die verschiedenen Süßungsmittel betreffend, kann keine klare Aussage getroffen werden, Isomaltulose ist beispielsweise bei dem Pilsener-Mischgetränk als am wenigsten erfrischend bewertet worden, bei dem Diät-BierMischgetränk hingegen als am besten. Ähnlich sind die Bewertungen der anderen Süßungsmitteln.

Bei der Bewertung der sensorischen Gesamtqualität ergibt sich keine eindeutige Tendenz. Bei den vier am besten bewerteten Biermischgetränken sind dreimal solche, die mit Isomaltulose gesüßt wurden, enthalten. Das am schlechtesten bewertete Getränk ist das jenige mit Diät-Bier als Grundbier und mit Süßstoffmischung. In diesem Getränk sind nur sehr geringe Mengen an Kohlenhydraten vorhanden. Insgesamt am schlechtesten sind die Mischgetränke mit Doppelbock als Grundbier bewertet worden.

Die Durchschnittswerte der Erfrischung und der Gesamtqualität (Tabelle 15) lassen erkennen, dass Isomaltulose und Saccharose in beiden Fällen klar besser bewertet wurde, als die Süßstoffmischung. Isomaltulose hatte bessere Bewertungen in der Gesamtqualität, wohingegen die Getränke, die mit Saccharose gesüßt wurden als etwas erfrischender empfunden wurden.

**Tabelle 15:**

| | Erfrischungseffekt | sensorische Gesamtqualität |
|---|---|---|
| Isomaltulose | 2,34 | 3,65 |
| Saccharose | 2,40 | 3,48 |
| Süßstoff | 2,29 | 3,20 |

Die Süßung der Biermischgetränke mit Saccharose und Isomaltulose ist aufgrund der durchgeführten Verkostungen als etwa gleichwertig anzusehen, die Verwendung der Süßstoffmischung verliert im Vergleich klar.

### 6.4 Kontamination der Biermischgetränke

### 6.4.1 Ansätze

Die fertig gemischten Getränke wurden, mittels Handfüller in 0,5 l PET-Flaschen gefüllt. Vor dem Verschrauben sind im CO₂-Strom je 50 µl der gewaschenen Reinzuchtsuspension in die Flaschen pipettiert worden.

Es wurden folgende Bakterien zur Kontamination benutzt:
- Lactobacillus brevis (DSM 20054)
- Pediococcus damnosus (DSM: 20331)
- und Megasphera cerevisiae (Wildstamm)

Zusätzlich wurden Flaschen mit den folgenden Hefen inkubiert:
- Saccharomyces diastaticus (Wildstamm)
- Saccharomyces cerevisiae MJJ2
- und Schizosaccharomyces pombe (Wildstamm)

Die Inkubation erfolgte bei 20 °C unter Lichtabschluss in verschlossenen Flaschen.

### 6.4.2 Messung des mikrobiologischen Verderbs

Die Trübung in den Flaschen wurde mit einem Prozessphotometer (Sigrist KTL 30-21) bei den Messwinkeln 90 ° und 25 ° gemessen. Die Messung bei zwei verschiedenen Messwinkeln erfolgte, um den verschiedenen Zellgrößen der Hefen und Bakterien Rechnung zu tragen. Das erfassbare Trübungsmaximum lag bei 20 EBC.

Die Bombagenbildung wurde anhand der Verformung der benutzten PET-Flaschen an ausgewählten Punkten erfasst:
- absolute Höhe der Flasche
- Durchmesser in der Höhe 11,5 cm
- und Schulteransatz.

Zur Messung wurde eine digitale Schiebelehre benutzt.

### 6.4.3 Trübungsverläufe

Nach Inkubation der verschiedenen Ansätze ergaben sich die in den folgenden Abbildungen dargestellten Trübungsverläufe.

### 6.4.3.1 S. diastaticus

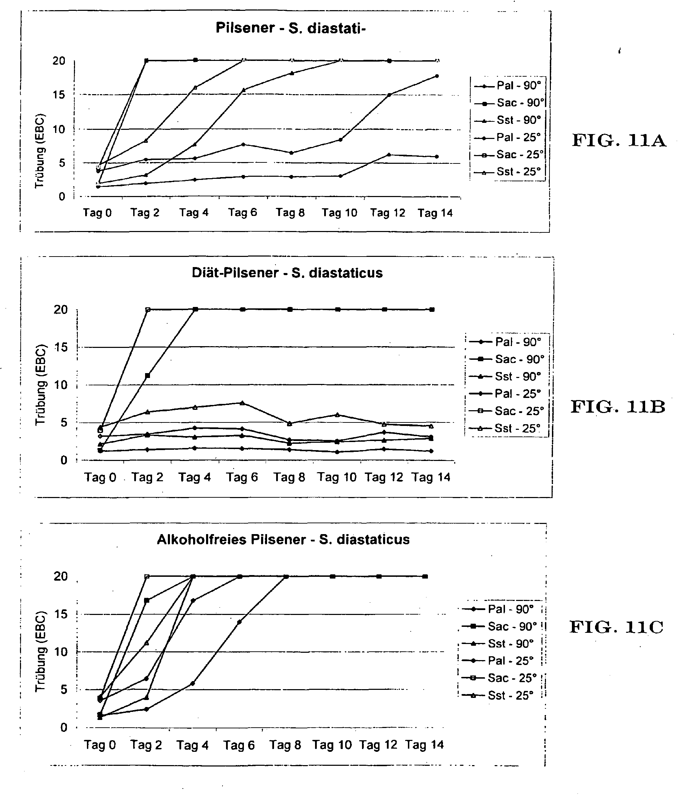

Figur 11a zeigt die Trübungsverläufe des mit Saccharomyces diastaticus kontaminierten Biermischgetränks mit dem Grundbier Pilsener. Das Getränk mit der Saccharosesüßung erreicht bereits am zweiten Tag der Inkubation den maximalen Trübungswert. Bei der Süßung mit Süßstoffen steigt die Trübung langsamer an, um aber auch im betrachteten Zeitraum den Maximalwert zu erreichen. Offensichtlich ist Saccharomyces diastaticus fähig, auf der Grundlage des Restextraktes des Grundbieres zu wachsen und das Getränk zu trüben. Die Trübung im Isomaltulosehaltigen Getränk steigt am langsamsten an; es ist zu vermuten, dass das Wachstum im Wesentlichen auf der Grundlage des Bierextraktes erfolgt, und die Isomaltulose das Verderben des Getränkes nicht beschleunigt.

Figur 11b zeigt die Trübungsverläufe des mit Saccharomyces diastaticus kontaminierten Biermischgetränks mit dem Grundbier Diät-Pilsener. Bei der Verwendung des Diätbieres als Grundbier entsteht nur bei der herkömmlichen Saccharosesüßung eine deutliche Trübung. Das Diätbier bringt keinen eigenen Extrakt mit, so dass gefolgert werden kann, dass Saccharomyces diastaticus weder die Süßstoffmischung noch die Isomaltulose als Substrat nutzen kann.

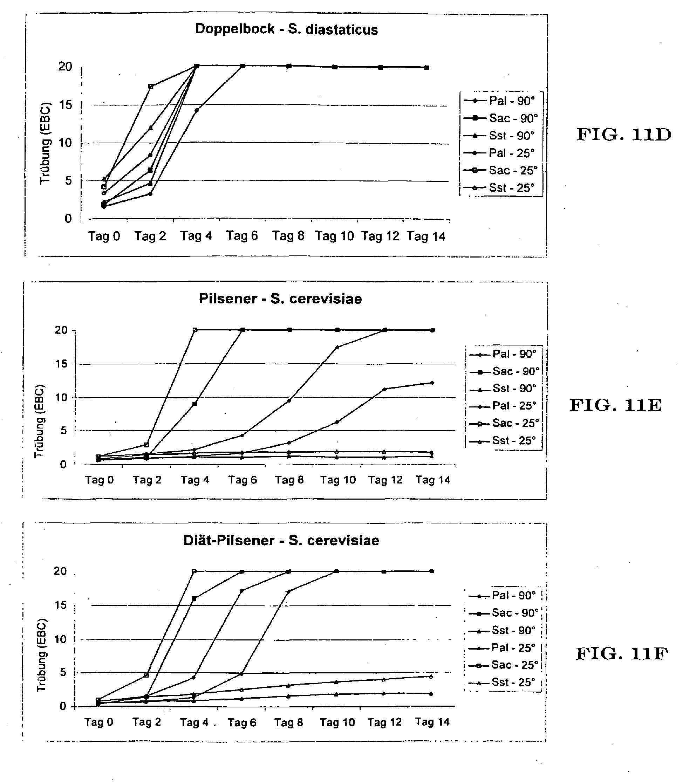

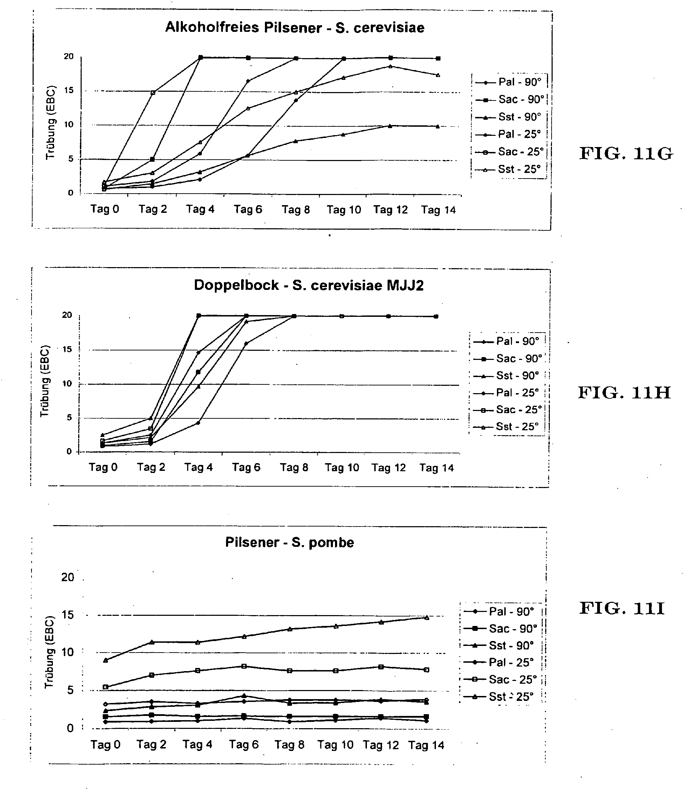

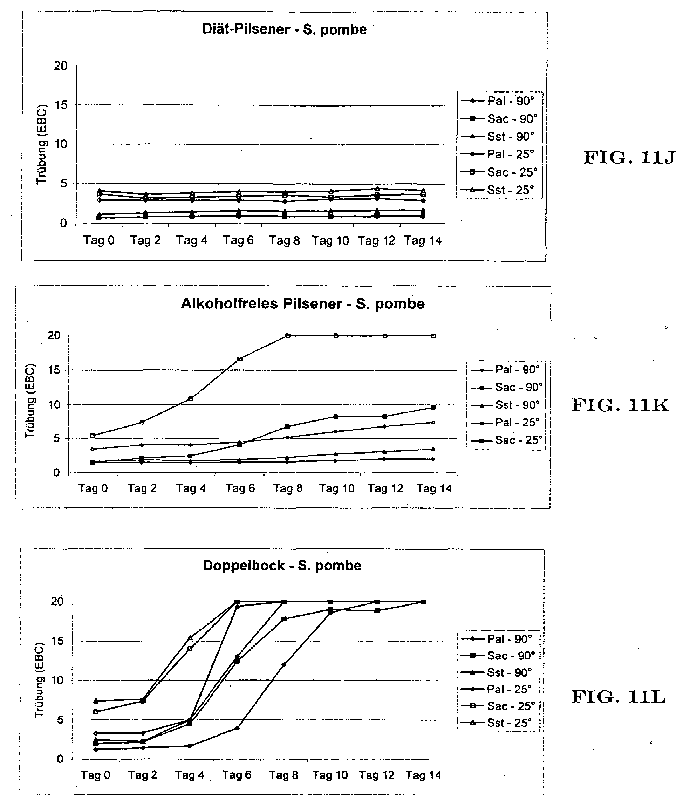

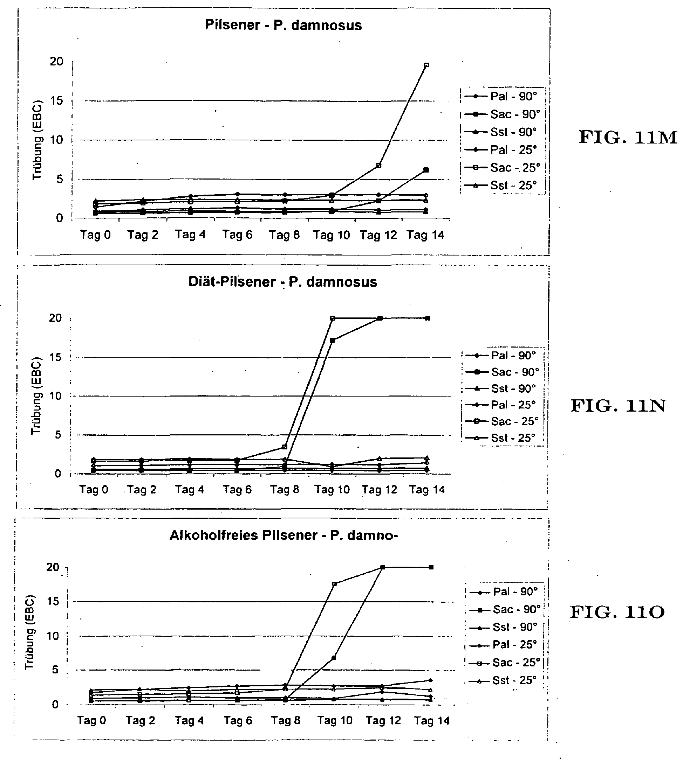

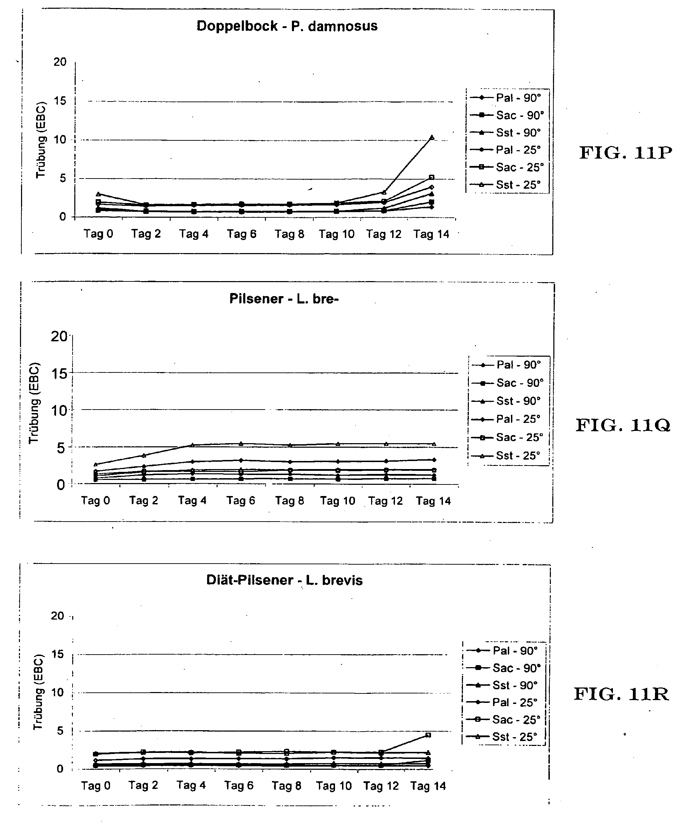

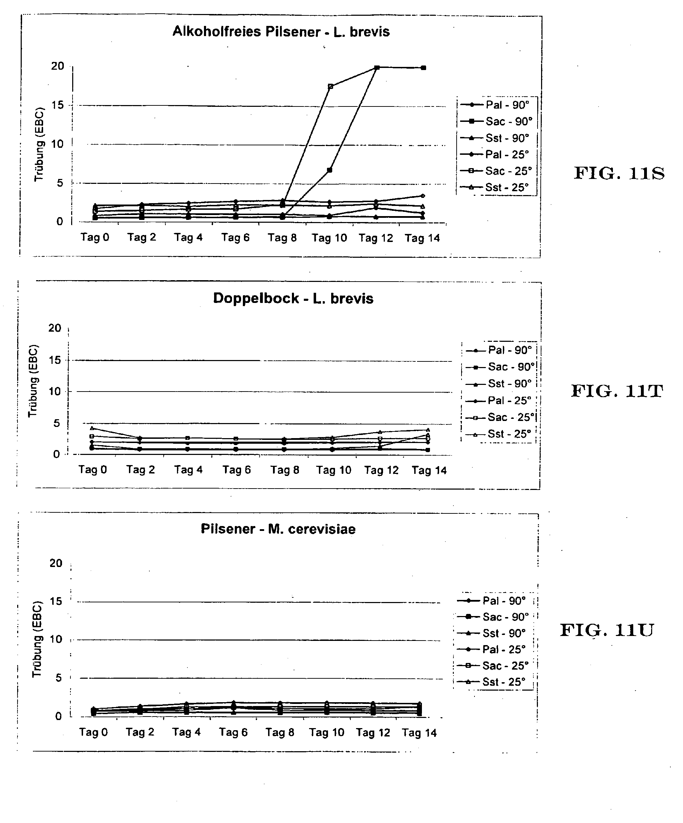

Figur 11 c zeigt die Trübungsverläufe des mit Saccharomyces diastaticus kontaminierten Biermischgetränks mit dem Grundbier alkoholfreies Pilsener. In den Ansätzen mit dem alkoholfreien Bier erreichen alle Ansätze im betrachteten Zeitraum das Trübungsmaximum. Saccharose erzeugt die schnellste Trübungszunahme, in den beiden anderen Ansätzen ist die Hefe vom Alkohol ungehindert in der Lage, aufgrund des Restextraktes aus dem Bieranteil zu wachsen. Der langsamste Verderb tritt bei den Isomaltulosehaltigen Ansätzen auf.

Figur 11 d zeigt die Trübungsverläufe des mit Saccharomyces diastaticus kontaminierten Biermischgetränks mit dem Grundbier Doppelbock. Trotz des höheren Alkoholgehaltes, der durch die Verwendung des Doppelbocks in das Biermischgetränk eingebracht wurde, erreichen nahezu alle Ansätze gleich schnell etwa am dritten Tag der Inkubation den maximalen Trübungswert. Diese Mischgetränke weisen die höchsten pH-Werte und recht niedrige Bitterstoffgehalte auf. Das verwendete Grundbier enthielt zudem große Mengen vergärbaren Restextraktes, auf dessen Grundlage das Zellwachstum erfolgte.

### 6.4.3.2 S. cerevisiae MJJ2

Figur 11 e zeigt die Trübungsverläufe des mit Saccharomyces cerevisiae MJJ2 kontaminierten Biermischgetränks mit dem Grundbier Pilsener. Die obergärige Brauereihefe Saccharomyces cerevisiae MJJ 2 entwickelt das schnellste Zellwachstum bei Vorhandensein der Saccharose. Deutlich später, aber unzweifelhaft auf der Grundlage der Isomaltulose erfolgt die Trübungszunahme beim Isomaltulose-Ansatz. Die nicht zunehmende Trübung bei der Süßstoffsüßung belegt, dass weder die Süßstoffe, noch der Restextrakt des Pilsener Bieres als Wachstumsgrundlage genutzt werden kann.

Figur 11f zeigt die Trübungsverläufe des mit Saccharomyces cerevisiae kontaminierten Biermischgetränks mit dem Grundbier Diät-Pilsener. Auf Grundlage von Diätbier hergestelltem Biermischgetränk trübt das saccharosehaltige Getränk sehr schnell ein. Die Isomaltulose wird langsamer verstoffwechselt als die Saccharose, jedoch schneller als bei Verwendung des Pilsner Bieres als Grundbier, was im Wesentlichen darauf zurückgeführt werden kann, dass das Diätbier weniger Hopfen und etwas weniger Alkohol enthält. Diese beiden Substanzen hemmen in diesem Versuchsansatz das Hefewachstum weniger stark. Im Ansatz mit den Süßstoffen kommt es zu in keiner Trübungszunahme.

Figur 11g zeigt die Trübungsverläufe des mit Saccharomyces cerevisiae kontaminierten Biermischgetränks mit dem Grundbier alkoholfreies Pilsener. In Abwesenheit von Alkohol ist diese Hefe in der Lage, zumindest Teile des in diesem Bier vorhandenen Restextraktes zu verwerten, was durch den Anstieg der Trübung bei der Süßstoffsüßung belegt wird. Bei der Saccharosesüßung ist das Trübungsmaximum bereits am dritten Tag erreicht. Bei dem Isomaltulosehaltigen Ansatz verläuft die Trübungszunahme langsamer. In allen Ansätzen werden Teile des im Bier vorhandenen Restextraktes verwertet.

Figur 11 h zeigt die Trübungsverläufe des mit Saccharomyces cerevisiae kontaminierten Biermischgetränks mit dem Grundbier Doppelbock. Auch die hier betrachtete Hefe ist in allen Ansätzen mit dem Doppelbock als Grundbier sehr schnell in der Lage zu wachsen. Dies wird auf die große Menge vergärbaren Restextraktes und die relativ geringen Einflüsse der Selektivfaktoren pH-Wert und Bitterstoffgehält zurückgeführt.

### 6.4.3.3 S. pombe

Figur 11i zeigt die Trübungsverläufe des mit Schizosaccharomyces pombe kontaminierten Biermischgetränks mit dem Grundbier Pilsener Die Ansätze mit Grundbier Pilsener und der Hefe Schizosaccharomyces pombe zeigen einen sehr untypischen Verlauf. Da die Ansätze mit den Süßstoffen auf der einen Seite und der Saccharose auf der anderen Seite eine beträchtliche Trübung nahezu von Anfang aufweisen, die jedoch über den Zeitverlauf nahezu konstant bleiben, wird geschlussfolgert, dass hier eine kolloidale Trübung des Bieranteils vorliegt, eventuell hervorgerufen, durch zu hohe Sauerstoffaufnahmen bei der Abfüllung. Dies wird gestützt dadurch, dass hauptsächlich die Werte bei der 25 ° Trübungsmessung hoch sind. Messungen bei 25 ° zeigen tendenziell eher kleine Trübungspartikel an, Hefezellen sollten hingegen auch bei 90 ° zu erkennen sein.

Figur 11j zeigt die Trübungsverläufe des mit Schizosaccharomyces pombe kontaminierten Biermischgetränks mit dem Grundbier Diät-Pilsener. Bei der Inkubation der Mischgetränke mit dem Diätbier als Bieranteil mit Schizosaccharomyces pombe ist in keinem Ansatz eine deutliche Trübungszunahme zu erkennen. Dies wird so gewertet, dass die Hefe durch das Zusammenspiel von Sauerstoffabschluss, Vorhandensein von Alkohol und Hopfen am Wachstum gehindert wurde. Da diese Hefe jedoch bereits in ähnlichen Versuchsreihen in purem Diätbier in der Lage war, Isomaltulose zu verwerten, spielt hier wahrscheinlich der durch die Limonade abgesenkte pH-Wert eine entscheidende Rolle für das Ausbleiben von Zellwachstum in diesen Ansätzen. Tabelle 10 ist zu entnehmen, dass die pH-Werte der Biermischgetränke bei 3,5 oder sogar leicht darunter liegen, wohingegen der pH-Wert eines Bieres bei leicht über 4 liegt.

Figur 11 k zeigt die Trübungsverläufe des mit Schizosaccharomyces pombe kontaminierten Biermischgetränks mit dem Grundbier alkoholfreies Pilsener. Bei Abwesenheit von Alkohol ist Schizosaccharomyces pombe offensichtlich trotz des niedrigen pH-Wertes in der Lage, eine leichte Aktivität zu entwickeln. Dies gilt zumindest für die Umsätze mit Saccharose. Bei den schwerer zu verwertenden Süßungen in den Ansätzen mit Isomaltulose und Süßstoffen sind im betrachteten Zeitraum nur sehr geringe und uneindeutige Trübungszunahmen zu bemerken.

Figur 11l zeigt die Trübungsverläufe des mit Schizosaccharomyces pombe kontaminierten Biermischgetränks mit dem Grundbier Doppelbock. Die Getränke, die mit dem Doppelbock hergestellt wurden zeigen in allen Ansätzen recht schnelle Trübungszunahmen. Dies wird der Tatsache zugerechnet, dass nicht nur die bereits erwähnten hohen Anteile an vergärbaren Zuckern aus dem Bier eingebracht werden, zusätzlich besitzen diese Biermischgetränke auch die höchsten pH-Werte aller Ansätze (siehe Tabelle 12). Diese liegen hier bei knapp oberhalb von 3,8.

### 6.4.3.4 P. damnosus

Figur 11 m zeigt die Trübungsverläufe des mit Pediococcus damnosus kontaminierten Biermischgetränks mit dem Grundbier Pilsener. Bei der Verwendung des Pilsener Bieres blieben alle Ansätze nach der Kontamination mit Pediococcus damnosus lange Zeit stabil. Die mit Saccharose gesüßten Ansätze wiesen zum Ende des betrachteten Zeitraumes eine deutliche Trübung und damit Verderb auf.

Figur 11 n zeigt die Trübungsverläufe des mit Pediococcus damnosus kontaminierten Biermischgetränks mit dem Grundbier Diät-Pilsener. Die gefundenen Trübungsverläufe bei der Verwendung des Grundbieres Diätbier korrelieren gut mit denen beim Grundbier Pilsener. Die schnellere Trübungszunahme bei den saccharosehaltigen Ansätzen liegt in den etwas geringeren Alkohol- und Bitterstoffgehalten begründet. Dass auch bei dem Diätbier, welches keinen eigenen Kohlenhydratanteil einbringt, nur bei der Saccharosesüßung eine Trübungszunahme nachzuweisen war, unterstützt die bei dem Grundbier Pilsener getroffene Annahme, dass das Zellwachstum tatsächlich auf der Grundlage des Süßungsmittels Saccharose stattfand, die anderen Süßungsmittel für P. damnosus keine Lebensgrundlage bieten. Figur 11o zeigt die Trübungsverläufe des mit Pediococcus damnosus kontaminierten Biermischgetränks mit dem Grundbier alkoholfreies Pilsener.

Auch in den Ansätzen mit dem alkoholfreien Bier zeigen nur die Ansätze mit Saccharose einen Trübungsanstieg. P. damnosus kann nur Saccharose verwerten.

Figur 11 p zeigt die Trübungsverläufe des mit Pediococcus damnosus kontaminierten Biermischgetränks mit dem Grundbier Doppelbock. Die in den anderen Ansätzen beobachtete Trübungsbildung wird hier durch den höheren Alkoholanteil verzögert. Jedoch gibt es gegen Ende des betrachteten Zeitraumes bei allen Ansätzen einen leichten Anstieg in der Trübung. Daraus wird geschlossen, dass hier ein leichtes Wachstum auf der Grundlage des Restzuckers des Bieranteils stattfindet.

### 6.4.3.5 L. brevis

Figur 11 q zeigt die Trübungsverläufe des mit Lactobacillus brevis kontaminierten Biermischgetränks mit dem Grundbier Pilsener. Bei der Inkubation der Ansätze mit dem Grundbier Pilsener mit Laktobazillus brevis ist kein Anstieg der Trübung zu beobachten. Konstante, leicht erhöhte Werte werden als Grundtrübung betrachtet, die unter anderem auch durch die Einbringung der Zellsuspension bei der Beimpfung herrühren kann.

Figur 11r zeigt die Trübungsverläufe des mit Lactobacillus brevis kontaminierten Biermischgetränks mit dem Grundbier Diät-Pilsener. Alle betrachteten Ansätze blieben lange Zeit konstant. Ein leichtes Ansteigen der Trübung ist in den Ansätzen mit Saccharose zu erkennen. Dieser Effekt ist eventuell bedingt durch die etwas geringeren Alkohol und Bitterstoffkonzentrationen des Diätbieres.

Figur 11 s zeigt die Trübungsverläufe des mit Lactobacillus brevis kontaminierten Biermischgetränks mit dem Grundbier alkoholfreies Pilsener. In den Ansätzen mit alkoholfreiem Grundbier belegt die im saccharosehaltigen Ansatz zu beobachtende Trübungsanstieg, dass L. brevis bei Abwesenheit von Alkohol in der Lage ist, saccharosehaltige Getränke zu verderben. Die beiden anderen Ansätze bleiben konstant; es findet keine Verwertung der Isomaltulose oder der Süßstoffe statt.

Figur 11t zeigt Trübungsverläufe des mit Lactobacillus brevis kontaminierten Biermischgetränks mit dem Grundbier Doppelbock. In den mit Doppelbock als Grundbier hergestellten Ansätzen der Biermischgetränke ist keine Trübungszunahme zu erkennen. Vermutlich aufgrund des höheren Alkoholgehaltes, zusammen mit dem pH-Wert, der niedriger ist als für Bier typisch, ist keine Wachstumsaktivität nachweisen.

### 6.4.3.6 M. cerevisiae

Figur 11 u zeigt die Trübungsverläufe des mit Megasphera cerevisiae kontaminierten Biermischgetränks mit dem Grundbier Pilsener. Die Versuchsreihe der Mischungen mit dem Grundbier Pilsener sei hier exemplarisch für die Gesamtheit der Ansätze mit Megasphera cerevisiae dargestellt. In keinem Ansatz ist eine Zunahme der Trübung beobachtet worden. Aller Wahrscheinlichkeit nach liegt dies an den pH-Werten, die selbst im Fall des Doppelbock-Mischgetränkes deutlich unter 4 liegen.

### 6.4.4 Bombagenbildung

Ein ebenso eindeutiger Verderb eines Erfrischungsgetränks wie die Trübung ist die sogenannte Bombagenbildung. Tritt Verderb der Flaschenfüllung durch mikrobielle Aktivität auf, sind an der Flasche Verformungen (Bombagen) aufgrund des erhöhten Innendrucks sowie die entstandene Trübung zu erkennen.

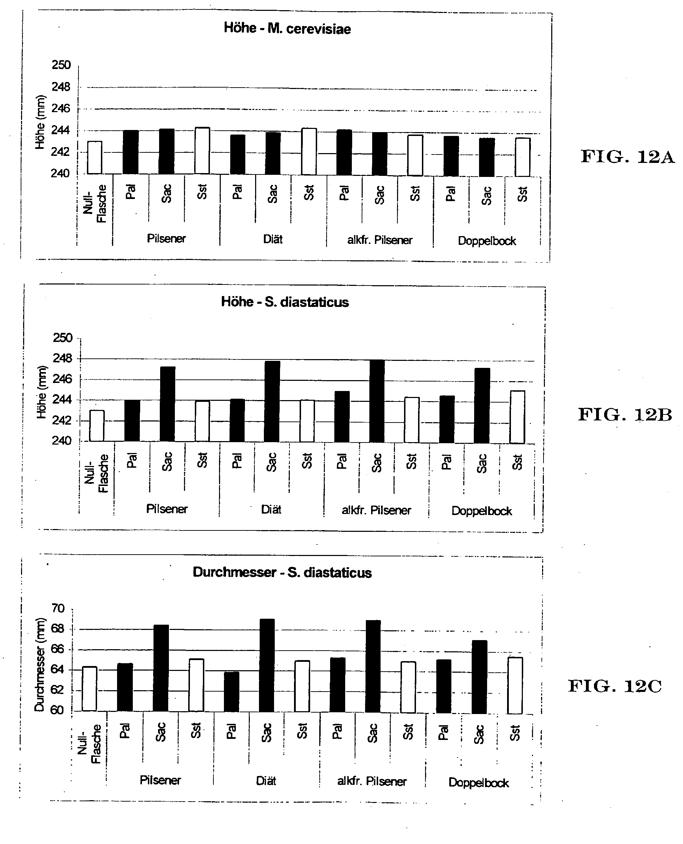

Die in den Figuren 12a bis l dargestellten Abmaße der nicht inkubierten Flaschen (Nullflasche) sind nach der Befüllung der Flasche, jedoch vor der Inkubation gemessen worden. Dies bedeutet, dass leichte Schwankungen zu diesem Referenzwert in der normalen Drucksteigerung begründet liegen, die durch die Lagerung des karbonisierten Getränks bei 20 °C auftritt. Im Folgenden wird diese Ausdehnung Normalausdehnung genannt. Am Beispiel der folgenden Abbildung sei dies dargestellt.

Figur 12a zeigt die Höhenveränderungen der kontaminierten Flaschen nach Inkubation mit Saccharomyces diastaticus im Vergleich zur unverformten Flasche (Nullflasche). Es ist zu erkennen, dass nach Inkubation der befüllten Flaschen mit Megasphera cerevisiae leichte Abweichungen der befüllten Flaschen zur Nullflasche vorliegen. Anhand der gemessenen Trübung wurde jedoch kein Wachstum festgestellt. Es ist weiterhin zu bemerken, dass Megasphera auch bei stattfindendem Wachstum, wenn überhaupt, nur minimale Mengen CO₂ bildet und so kaum zu einer Erhöhung des Innendrucks der Flasche beitragen kann.

Die Bombagenentwicklung ist generell eher für den Nachweis von Getränkeverderb durch Hefen als durch Bakterien geeignet, da Hefen bei Stoffwechselaktivität deutlich mehr CO₂ bilden. Die Gefahr durch Bombagenbildung ist also für Verderb durch Hefen relevanter als für Bakterien, die Getränke eher durch die Bildung von Trübung und Fehlaromen verderben.

Figur 12b zeigt die Höhenveränderungen der kontaminierten Flaschen nach Inkubation mit Saccharomyces diastaticus im Vergleich zur unverformten Flasche (Nullflasche). Im Wesentlichen korrelieren die entstandenen Verformungen der Flasche mit den bereits bei der Trübungsbildung festgestellten Verläufen. Leichte Schwankungen in den Abmaßen können durch die Erhöhung des Innendrucks hervorgerufen worden sein, die durch die Lagerung eines karbonisierten Getränks bei 20 °C entstehen. Deutliche Veränderungen der absoluten Höhe der mit Saccharomyces diastaticus beimpften Flaschen sind nur bei den saccharosehaltigen Ansätzen zu beobachten.

Figur 12c zeigt die Durchmesserveränderungen der kontaminierten Flaschen nach Inkubation mit Saccharomyces diastaticus im Vergleich zur unverformten Flasche (Nullflasche). Ebenso wie bei den Höhenvermessungen sind deutliche Veränderungen der Flaschenabmaße nur zu erkennen, in den Saccharomyces diastaticus Saccharose verwerten konnte.

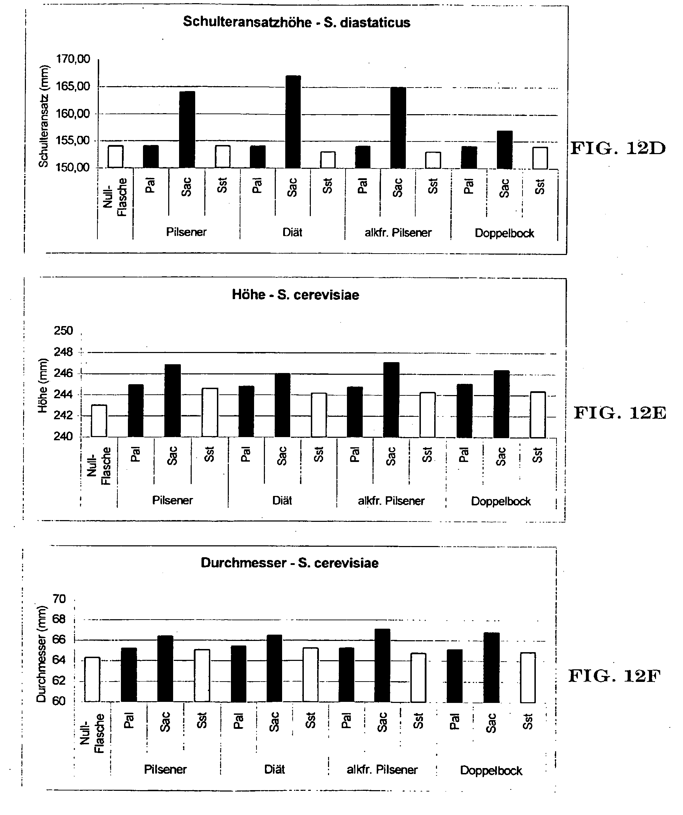

Figur 12d zeigt die Schulteransatzveränderungen der kontaminierten Flaschen nach Inkubation mit Saccharomyces diastaticus im Vergleich zur unverformten Flasche (Nullflasche). Wiederum sind deutliche Veränderungen nach Inkubation mit Saccharomyces diastaticus nur in den mit Saccharose gesüßten Getränken zu vermerken. Interessanterweise treten die stärksten Abweichungen bei dem Ansatz mit dem Diätbier auf, in dem der Kohlenhydratanteil alleine aus der Süßung des Limonadenanteils stammt. In allen mit Saccharomyces diastaticus beimpften Ansätzen ist nur die Saccharose als Stoffwechselgrundlage verwertet worden.

Figur 12e zeigt die Höhenveränderungen der kontaminierten Flaschen nach Inkubation mit Saccharomyces cerevisiae MJJ2 im Vergleich zur unverformten Flasche (Nullflasche). Für die mit Saccharomyces cerevisiae MJJ 2 inkubierten Ansätze gilt, dass die deutlichsten Abweichungen in den mit Saccharose gesüßten Getränken auftraten. Die Isomaltulosehaltigen Getränke, in denen auch mehr oder weniger starke Trübungen durch Zellvermehrung auftraten zeigen leichte Höhenausdehnungen, jedoch deutlich geringere als bei Saccharosesüßung.

Figur 12f zeigt die Durchmesserveränderungen der kontaminierten Flaschen nach Inkubation mit Saccharomyces cerevisiae MJJ2 im Vergleich zur unverformten Flasche (Nullflasche). Für die Durchmesserveränderungen der Flaschen nach Inkubation mit Saccharomyces cerevisiae MJJ2 gilt wie für die Höhenausdehnung, dass die deutlichsten Verformungen bei den mit Saccharose gesüßten Getränken auftraten, die Ausdehnungen bei den Isomaltulose- und süßstoffhaltigen Ansätzen sich jedoch im Bereich der Normalausdehnung bewegen.

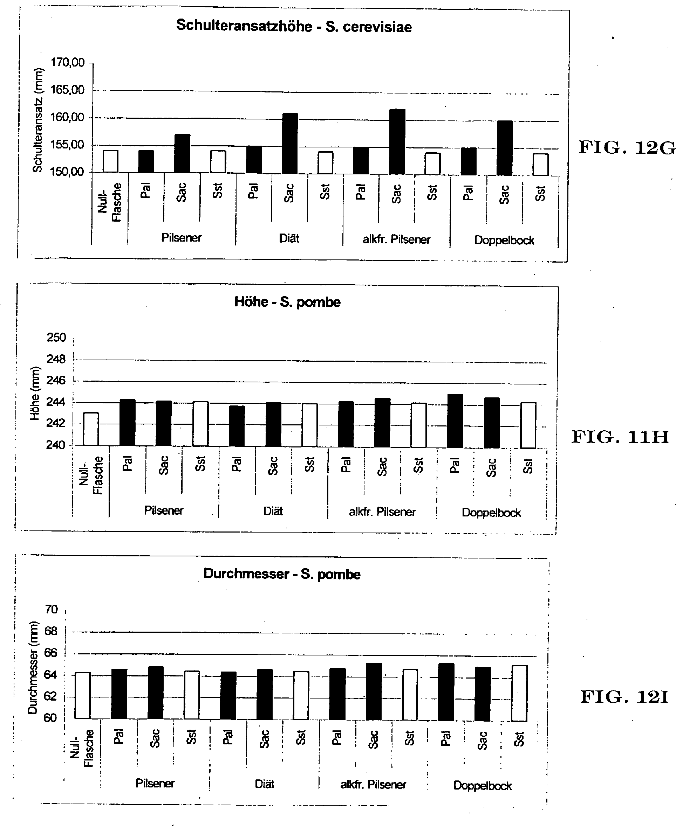

Figur 12g zeigt die Schulteransatzhöhenveränderungen der kontaminierten Flaschen nach Inkubation mit Saccharomyces cerevisiae MJJ2 im Vergleich zur unverformten Flasche (Nullflasche). Deutlich ist zu erkennen, dass relevante Verformungen der Flasche bezüglich des Parameters Schulteransatzhöhe der mit Saccharomyces cerevisiae MJJ2 inkubierten Flaschen nur in den saccharosegesüßten Versuchsansätzen aufgetreten sind.

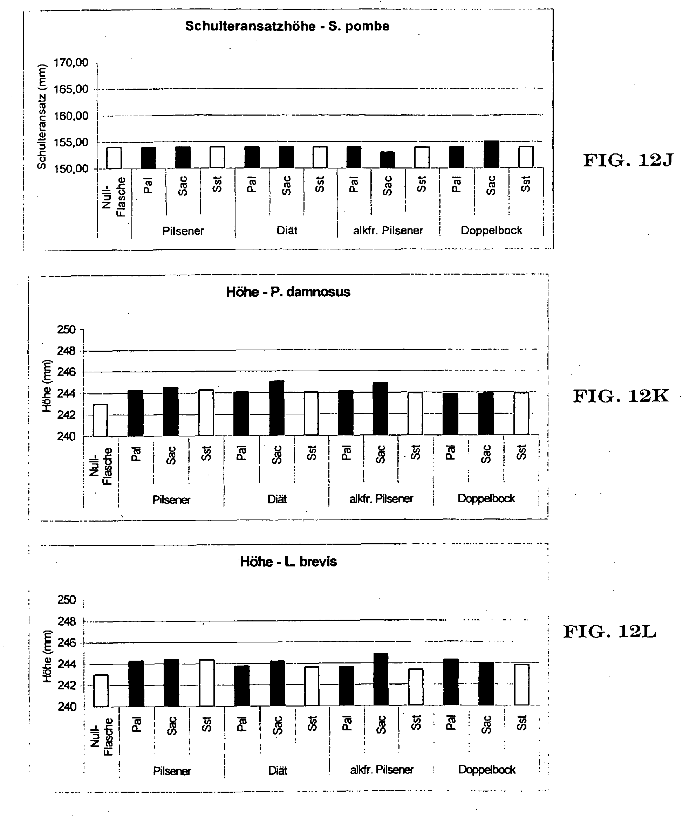

Figur 12h zeigt die Höhenveränderungen der kontaminierten Flaschen nach Inkubation mit Schizosaccharomyces pombe im Vergleich zur unverformten Flasche (Nullflasche). Es erfolgte in keinem der mit Schizosaccharomyces inkubierten Ansätze nennenswertes Wachstum, entsprechend sind keine Ausdehnungen an den Flaschen festgestellt worden, die die Normalausdehnung überschreiten. In Figur 12i und j gilt das Gleiche.

Figur 12i zeigt die Durchmesserveränderungen der kontaminierten Flaschen nach Inkubation mit Schizosaccharomyces pombe im Vergleich zur unverformten Flasche (Nullflasche). Figur 12j zeigt die Schulteransatzhöhenveränderungen der kontaminierten Flaschen nach Inkubation mit Schizosaccharomyces pombe im Vergleich zur unverformten Flasche (Nullflasche). In den mit Bakterien kontaminierten Versuchsansätzen sind erwartungsgemäß dort keine deutlichen Verformungen aufgetreten, wo auch keine Trübung gemessen worden ist. Pediococcus damnosus war in der Lage (Ausnahme: Doppelbock als Grundbier), in den mit Saccharose gesüßten Mischgetränken Trübung zu bilden. In den Mischungen mit Diätbier und dem alkoholfreien Bier sogar deutlich vor Ende des betrachteten Zeitraumes. Es sind geringe Abweichungen in der Höhenausdehnung zu erkennen.

Figur 12k zeigt die Höhenveränderungen der kontaminierten Flaschen nach Inkubation mit Pediococcus damnosus im Vergleich zur unverformten Flasche (Nullflasche). Diese Ausdehnung ist jedoch nur gering und an den anderen Messstellen nicht verifiziert worden. Grund hierfür kann sein, dass Pediococcus zu den homofermentativen Milchsäurebakterien gehört, die auch bei starker Stoffwechselaktivität nur geringe Mengen an CO2 zu bilden in der Lage sind.

Figur 12l zeigt die Höhenveränderungen der kontaminierten Flaschen nach Inkubation mit Lactobacillus brevis im Vergleich zur unverformten Flasche (Nullflasche). Anhand der Trübung ist Wachstum von L. brevis nur in dem mit alkoholfreiem Bier und dem Saccharose gesüßten Limonadenanteil hergestellten Biermischgetränk festgestellt worden. Zwar ist Lactobacillus brevis heterofermentativ, jedoch erfolgte das Wachstum nur sehr langsam, so dass nur im Parameter Höhenausdehnung eine Abweichung, die lediglich gering über der Normalausdehnung liegt, festgestellt wurde.

### 6.5 Zusammenfassung

Es wurden Biermischgetränke hergestellt, die sich wegen verschiedener gewählter Grundbiere in den Parametern Alkoholgehalt, Kohlenhydrateintrag des Bieranteils und Bitterstoffgehalt unterschieden. Durch Variation des Süßungsmittels wurden den Mischgetränken entweder Saccharose oder Isomaltulose als mögliches Substrat zugeführt, oder durch Einsatz von Süßstoffen von der Limonadenseite keine verwertbaren Kohlenhydrate eingebracht. Wegen der großen Relevanz von Hefen als Schädlinge in alkoholarmen aber zuckerreichen Erfrischungsgetränken, wurden die Getränke mit drei verschiedenen Hefen absichtlich kontaminiert und bei 20 °C inkubiert. Ausgewählt wurden die Hefe Saccharomyces diastaticus, weil sie als Bierschädling herausragende Bedeutung besitzt, da sie neben der normalen Fähigkeit niedermolekulare Kohlenhydrate zu vergären auch in der Lage ist, längere Kohlenhydratketten, sogenannte Dextrine, zu vergären. Weiterhin sind die Hefen Schizosaccharomyces pombe und Saccharomyces cerevisiae MJJ2 eingesetzt worden. Sie waren in Vorversuchen in der Lage, Isomaltulose zu verwerten; Schizosaccharomyces pombe war dazu auch in abgefülltem Bier fähig.

Neben diesen Hefen wurden auch Bakterien eingesetzt, die als Verderbniskeime für abgefülltes Bier große Bedeutung besitzen. Ausgewählt wurden Pediococcus damnosus, Lactobacillus brevis und Megasphera cerevisiae.

Es zeigte sich, dass die Hefen Saccharomyces diastaticus und Saccharomyces cerevisiae MJJ2 sehr schnell in der Lage waren, die meisten der kontaminierten Getränke zu verderben. Dies geschah sowohl durch Ausbilden einer starken Trübung, als auch durch starke Verformung der Flaschen (Bombagenbildung). Während jedoch Saccharomyces diastaticus in dem Versuchsansatz mit dem Diätbier (Kohlenhydrateintrag nur durch den Limonadenanteil) nur in Gegenwart von Saccharose wachsen konnte, wuchs Saccharomyces cerevisiae MJJ2 auch in dem mit Isomaltulose gesüßten Ansatz, jedoch überraschend langsamer als bei Saccharosesüßung. Daraus wird geschlussfolgert, dass Saccharomyces cerevisiae MJJ2 in der Lage war, unter den gegebenen Umständen auch Isomaltulose zu verwerten, allerdings überraschend langsamer als Saccharose. Saccharomyces diastaticus konnte die Isomaltulose überraschenderweise in keinem der hergestellten Getränke verwerten.

Diese Hefe ist nicht generell in der Lage, Isomaltulose als Substrat zu nutzen. Das nachgewiesene Wachstum der Saccharomyces-Hefen in den Ansätzen, die mit anderen Grundbieren als dem Diätbier hergestellt wurden, geschah bei allen Süßungsvarianten nahezu identisch und wird auf die Verwertung der großen Mengen Restextraktes zurückgeführt, die von den Bieranteilen mit in das fertige Mischgetränk eingebracht wurden.

Schizosaccharomyces pombe zeigte generell in keinem untersuchten Ansätzen wahrnehmbare Aktivität. Es wird angenommen, dass dies vor allem an den pH-Werten liegt, die aufgrund der Limonadenbeimischung deutlich unter denen normaler Biere liegen.

Bei der Auswertung der mit bierschädlichen Bakterien beimpften Versuchsansätze fällt auf, dass von Pediococcus damnosus und Lactobacillus brevis nur Ansätze getrübt werden konnten, die mit Saccharose gesüßt waren. In keinem der Ansätze, die mit Isomaltulose oder der Süßstoffmischung gesüßt wurden, konnte von diesen Bakterien Trübungen erzeugt werden. Die ebenfalls untersuchte Megasphera cerevisiae war generell nicht in der Lage, in den Biermischgetränken zu wachsen, der Grund hierfür ist vor allem in den niedrigen pH-Werten der Getränke zu suchen.

Zusammenfassend ist von den untersuchten Organismen nur Saccharomyces cerevisiae MJJ2 in der Lage, die als Süßung eingesetzte Isomaltulose zu verwerten, allerdings überraschend langsamer als die alternativ vorhandene Saccharose. Alle anderen Organismen können Isomaltulose überraschenderweise nicht verwerten.

Gegenüber der Verwendung von Saccharose zur Süßung des Limonadenanteils von Biermischgetränken ist Isomaltulose also in der Lage, die biologische Stabilität deutlich zu verbessern. Als ebenso stabil wie die erfindungsgemäß mit Isomaltulose gesüßten Getränke erwiesen sich die Ansätze mit Süßstoffmischung. Diese zeigen jedoch schlechtere Verkostungsergebnisse, die im Ganzen inakzeptabel sind.

### Beispiel 7 (nicht erfindungsgemäß): Einfluss der Isomaltulose auf das Aromaprofil von fermentierten Realwürzen

### 7.1 Realwürzen

Es wurde eine Pilsener Würze hergestellt. Ein Teil dieser Würze wurde so behandelt, dass etwa ein viertel des Extraktes aus Isomaltulose bestand. Die unbehandelte Originalwürze und die isomaltulosehaltige Würze wurden unter den gleichen Bedingungen (drucklos, 12 °C) von den gleichen Hefen, wie bei den Modellwürzen verwendet, vergoren.

Da die normale Bierherstellungspraxis simuliert werden sollte, wurden diese Würzen nicht in einem Schritt bis zur Endvergärung geführt, sondern bis etwa 1 bis 1,5 % über dem zu erwartenden Extrakt bei Endvergärung, danach wurde bei 1 °C eine 14-tägige Nachgärung angeschlossen. Die so hergestellten Biere wurden bierspezifisch nach MEBAK sowie gaschromatographisch auf die gleichen ausgewählten Aromakomponenten wie die Modellwürzen analysiert. Zusätzlich wurden bewertende Verkostungen durchgeführt. Die Veränderung des analytisch festgestellten Aromaprofils und des Geschmackseindrucks abhängig vom Isomaltulosegehalt sollte festgestellt werden.

In der Studienbrauerei der VLB wurde eine Bierwürze hergestellt (Typ Pilsener), die durch Rückverdünnung mit Wasser und Zugabe von Isomaltulose so eingestellt wurde, dass etwa 25 % des Extraktgehaltes der Würze aus Isomaltulose bestanden. Die unveränderte Würze und die isomaltulosehaltige Würze wurden unter gleichen Bedingungen parallel von verschiedenen Hefen vergoren.

In Tabelle 16 sind die Würzeanalysen dargestellt.

**Tabelle 16:**

| Würzeanalysen, mit und ohne Isomaltulose | | | |
|---|---|---|---|
| Parameter | Einheit | Würze original | Würze 25% Isomaltulose |
| Extraktqehalt | % | 11,26 | 11,33 |
| Extrakt, scheinbar, endvergoren | % | 1,93 | 4,2 |
| Endvergärungsgrad, scheinbar | % | 83,3 | 62,6 |
| pH | | 5,36 | 5,2 |
| Farbentiefe | EBC | 8,6 | 6,4 |
| Bittereinheiten | BE | 48,1 | 31,6 |
| Gesamtstickstoff | ppm | 969 | 655 |
| Freier Aminostickstoff | ppm | 175 | 124 |
| Zink | ppm | 0,17 | 0,15 |
| DMS | ppb | 30 | 20 |

Die Würzen wurden auf einen sehr ähnlichen Extraktgehalt eingestellt. Die Zugabe der Isomaltulose bewirkt, dass der Vergärungsgrad sinkt, da durch die Substitution von würzeeigenem Extrakt durch Isomaltulose der Anteil nicht vergärbarer (in der Endvergärungsgradanalytik) Kohlenhydrate steigt. Die weiteren Analysenwerte verändern sich entsprechend der Rückverdünnung, das heißt Gehalt, wie Bitterstoffe oder Eiweißfraktionen, sinken.

Beide Würzen wurden mit jeweils den folgenden vier Hefen vergoren:
- Saccharomyces carlsbergensis MJJ 11,
- Saccharomyces cerevisiae MJJ 25,
- Saccharomyces cerevisiae MJJ 2,
- Schizosaccharomyces pombe

### 7.2 Analyse der Aromakomponenten

In allen Fermentationsansätzen wurde nach Beendigung der Gärung (=4 Tage keine Extraktabnahme) folgende Aromakomponente bestimmt: Acetaldehyd, Ethylacetat, 1-Propanol, Isobutanol, Iso-Anylacetat, 2-Methylbutanol, 3-Methylbutanol, 2-Phenylethanol, Phenylacetat. Neben den relevanten Aromakomponenten wurden auch die während der Gärung entstandenen vicinalen Diketone erfasst. Diese sind relativ wichtige Aromakomponenten, die in vielen Fällen in der Brauereipraxis als Schlüsselsubstanzen für die Steuerung der Hauptgärung herangezogen werden.

### 7.3 Ergebnisse

### 7.3.1 Gärverlauf

Beim Gärverlauf der beiden Realwürzen (mit und ohne Isomaltulose) bei Vergärung mit Saccharomyces carlsbergensis MJJ 11 zeigt sich folgendes Bild: Die Extraktabnahme verläuft anfangs nahezu identisch, dann verflacht die Abnahmekurve bei der isomaltulosehaltigen Würze. Nachdem die nicht isomaltulosehaltige Würze den erwünschten Wert erreicht hatte, wurde auch die Vergärung der isomaltulosehaltigen Würze abgebrochen. Erwartungsgemäß bleibt hier der Restextrakt höher.

Auch bei der Vergärung mit Saccharomyces cerevisiae MJJ 25 verlaufen die Extraktabnahmekurven nur anfangs parallel. Die Kurven unterscheiden sich relativ früh (bereits am 5. Gärtag) und der Unterschied der verbleibenden Extrakte ist relativ deutlich.

Beim Gärverlauf von Realwürze (mit und ohne Isomaltulose) bei Vergärung mit Saccharomyces cerevisiae MJJ 2 zeigt sich folgendes Bild: Die Gärverläufe ähneln den vorangestellten, die Extraktabnahme beginnt ähnlich, danach verflacht die Kurve der isomaltulosehaltigen Würze.

Beim Gärverlauf von Realwürze (mit und ohne Isomaltulose) bei Vergärung mit Schizosaccharomyces pombe zeigt sich folgendes Bild: Die Extraktverlaufskurven verlaufen bei Schizosaccharomyces pombe nahezu identisch. Auch die erreichten Endwerte sind sehr ähnlich, da die Isomaltulose von dieser Hefe ebenfalls als Substrat genutzt werden kann.

### 7.3. 2 Analyse der fertigen Biere

Tabelle 17 zeigt die Analysenwerte der mit Saccharomyces carlsbergensis MJJ 11 und Saccharomyces cerevisiae MJJ 25 vergorenen Würzen (mit und ohne Isomaltulose)

**Tabelle 17:**

| | MJJ 11 ohne Isomaltulose | MJJ 11 mit Isomaltulose | MJJ 25 ohne Isomaltulose | MJJ 25 mit Isomaltulose |
|---|---|---|---|---|
| Stammwürze, errechnet [%] | 11,25 | 11,24 | 11,32 | 11,28 |
| Extrakt, scheinbar [%] | 2,35 | 3,68 | 3,3 | 4,16 |
| Extrakt, wirklich [%] | 4,04 | 5,1 | 4,82 | 5,44 |
| Alkohol [Vol.-%] | 4,71 | 3,98 | 4,28 | 3,59 |
| pH | 4,4 | 4,25 | 4,67 | 4,4 |
| Bittereinheiten [BE] | 30 | 27 | 33 | 29 |
| Schaumhaltbarkeit [s] | 276 | 263 | 343 | 281 |

Tabelle 18 zeigt die Analysenwerte der mit Schizosaccharomyces pombe und Saccharomyces cerevisiae MJJ 2 vergorenen Würzen (mit und ohne Isomaltulose)

**Tabelle 18:**

| | Schiz. pombe ohne Isomaltulose | Schiz. pombe mit Isomaltulose | MJJ 2 ohne Isomaltulose | MJJ 2 mit Isomaltulose |
|---|---|---|---|---|
| Stammwürze, errechnet [%] | 11,27 | 11,32 | 11,28 | 11,56 |
| Extrakt, scheinbar [%] | 2,41 | 4,21 | 2,13 | 4,58 |
| Extrakt, wirklich [%] | 4,08 | 5,5 | 3,87 | 5,91 |
| Alkohol [Vol.-%] | 4,67 | 3,64 | 4,86 | 3,75 |
| pH | 4,38 | 4,36 | 4,45 | 4,36 |
| Bittereinheiten [BE] | 33 | 26 | 29 | 25 |
| Schaumhaltbarkeit [s] | 276 | 197 | 228 | 256 |

Deutlich zu erkennen ist der bei den mit Isomaltulose versetzten Bieren höhere Restextrakt nach der Vergärung, da die Isomaltulose nicht vergoren wurde. Daraus resultiert in allen Fällen auch ein niedrigerer Alkoholgehalt. Dies gilt auch für Schizosaccharomyces pombe, die in den Modellwürzen die isomaltulosehaltigen Lösungen ähnlich gut verwerten konnte wie die Referenzlösung. In komplexen Mischkohlenhydratlösungen werden offensichtlich auch von dieser Hefe zuerst andere Zucker zuerst verwertet. Bevor die Isomaltulose abgebaut werden konnte, ist in dieser Versuchsreihe die Vergärung beendet worden. Der pH-Wert der isomaltulosehaltigen Biere ist durchgängig leicht niedriger als die der Vergleichsbiere, das gleiche gilt auch für die Bittereinheiten, allerdings ist hier der niedrigere Wert durch die Rückverdünnung zu begründen.

### 7.3.3 Aromakomponenten

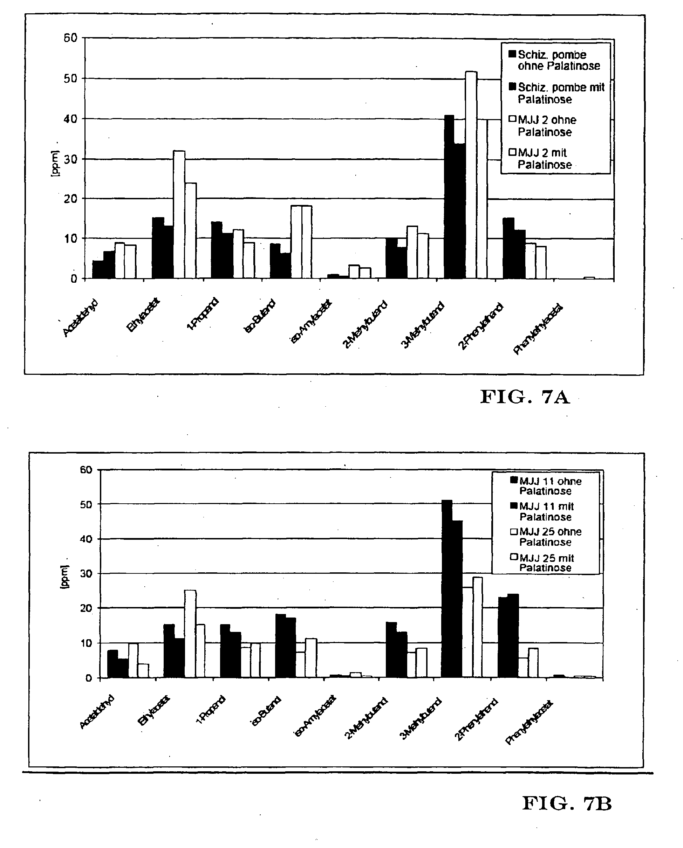

Figur 7a zeigt den Gehalt an Aromakomponenten nach Vergärung der Realwürzen durch Saccharomyces carlsbergensis MJJ 11 und Saccharomyces cerevisiae MJJ 25.

Es ist kein klarer Einfluss des Isomaltulosezusatzes auf die Aromakomponentenbildung zu erkennen. Zwar bildete MJJ 11 bei fast allen Komponenten im Ansatz ohne Isomaltulose größeren Mengen der jeweiligen Substanz, jedoch sind die Unterschiede nur gering und zudem sind sie vermutlich der absolut etwas geringeren Menge an verwertetem Substrat geschuldet. Weiterhin ist festzustellen, dass Saccharomyces cerevisiae MJJ 25 in einigen Fällen in der isomaltulosehaltigen Lösung höhere Konzentrationen der betreffenden Substanz bildete. Anhand der hier dargestellten Daten kann nicht eindeutig gesagt werden, dass das Vorhandensein der Isomaltulose einen Einfluss auf das gebildete Aromaprofil hat.

Figur 7b zeigt den Gehalt an Aromakomponenten nach Vergärung der Realwürzen durch Schizosaccharomyces pombe und Saccharomyces cerevisiae MJJ 2.

Es ist ebenfalls kein klarer Einfluss des Isomaltulosezusatzes auf die Aromakomponentenbildung zu erkennen. In den meisten Fällen zwar wird weniger von den betrachteten Substanzen in den Würzen mit Isomaltulosezusatz gebildet, bedingt jedoch auch durch die insgesamt weniger verwertete Menge Substrat. Bemerkenswerter Weise bildete Schizosaccharomyces pombe bei Vorhandensein von Isomaltulose wieder etwas mehr Acetaldehyd.

In den Würzen ohne Isomaltulose werden weniger Diacetyl und Pentandion gebildet. Die Unterschiede in den Konzentrationen sind nicht nur mit dem geringeren Umsatz von Substrat zu erklären: In den isomaltulosehaltigen Würzen wurde etwa ein Viertel des Extraktes durch Isomaltulose ersetzt. Die gemessenen Gehalte sind jedoch in den Würzen mit Isomaltulose nur 50 % oder noch weniger verglichen mit den unbehandelten Würzen. Die Anwesenheit der Isomaltulose in den Würzen behindert diejenigen Stoffwechselwege, die mit der Bildung der Substanzen Diacetyl und Pentandion zusammenhängen. Ausnahmen sind hier die Würzen, die mit Schizosaccharomyces pombe vergoren wurden. Diese Hefe bildete in der Würze mit Isomaltulose mehr Diacetyl und auch mehr Pentandion.

Das Vorhandensein von Isomaltulose hat auf die Entwicklung von Substanzen aus der Gruppe der Ester und höheren aliphatischen Alkohole (und Acetaldehyd) keinen nennenswerten Einfluss. Ausnahme ist hier die Hefe Schizosaccharomyces pombe, die offensichtlich mehr Acetaldehyd bildet, wenn statt Maltose auch noch Isomaltulose als Substrat vorhanden ist. Diese Hefe ist auch die Ausnahme bei der Bildung von vicinalen Diketonen. Bei den brauereitypischen Hefen wird die Bildung dieser Substanzen offensichtlich durch das Vorhandensein von Isomaltulose verlangsamt.

### 7.3.4 Verkostung

Zusätzlich zur chemischen Analytik wurden die Biere nach beendeter Haupt- und Nachgärung bewertend verkostet. Jeweils auf einer Skala von 1 bis 5 wurden folgende Parameter bewertet: Süßeindruck, Bittereindruck, Hopfenaroma, Malzigkeit, Fruchtigkeit, Rezenz, Vollmundigkeit und Gesamteindruck.

Nachstehend sind die Ergebnisse der Verkostungen dargestellt.

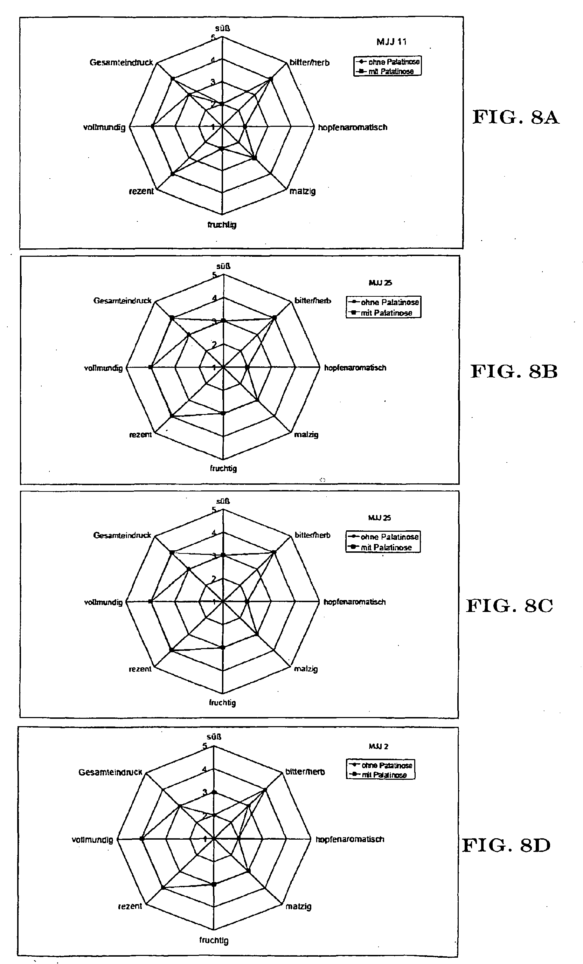

Figur 8a zeigt die Ergebnisse der bewertenden Verkostung der Biere aus den Realwürzen; vergoren mit Saccharomyces carlsbergensis MJJ 11 (10 Verkoster): Die sich durch das Verkostungsschema ergebenden Aromaprofile liegen nach Vergärung durch Saccharomyces carlsbergensis MJJ 11 nahezu identisch übereinander, unabhängig davon ob Isomaltulose in der Würze enthalten war, oder nicht. Lediglich im Gesamteindruck wurde das Isomaltulose-Bier etwas besser bewertet Ein häufig genannter Grund war ein "runderer" Geschmackseindruck, obwohl die einzelnen Parameter gleich bewertet wurden.

Figur 8b zeigt die Ergebnisse der bewertenden Verkostung der Biere aus den Realwürzen; vergoren mit Saccharomyces cerevisiae MJJ 25 (10 Verkoster): Auch nach Vergärung mit Saccharomyces cerevisiae MJJ 25 liegen die Aromaprofile nahezu identisch übereinander. Wieder ist das isomaltulosehaltige Bier in der Gesamtbenotung leicht besser beurteilt worden, obwohl die einzelnen Parameter gleich bewertet wurden. Nach Vergärung mit Saccharomyces cerevisiae MJJ 25 wurden allerdings sowohl der Bittereindruck als auch die Fruchtigkeit der Biere stärker wahrgenommen.

Figur 8c zeigt die Ergebnisse der bewertenden Verkostung der Biere aus den Realwürzen; vergoren mit Saccharomyces cerevisiae MJJ 2 (10 Verkoster): Nach Vergärung mit Saccharomyces cerevisiae MJJ 2 sind die Biere wiederum recht ähnlich bewertet worden. Das Bier ohne Isomaltulose wurde als weniger süß wahrgenommen, dafür trat jedoch der Eindruck der Bittere stärker in den Vordergrund, wurde auf der anderen Seite vom Vorhandensein der Isomaltulose offensichtlich etwas kompensiert. In der Gesamtqualität sind beide Biere gleich bewertet worden.

Figur 8d zeigt die Ergebnisse der bewertenden Verkostung der Biere aus den Realwürzen; vergoren mit Schizosaccharomyces pombe (10 Verkoster): Nach der Vergärung durch Schizosaccharomyces pombe unterschieden sich die Biere offenbar deutlich. Das isomaltulosehaltige Bier wurde als süßer empfunden, offenbar diese Süße jedoch als malzig wahrgenommen. Obwohl die Intensität der Bittere gleich stark empfunden wurde, ist bei dem Bier ohne Isomaltulose diese Bittere als etwas hopfenaromatischer wahrgenommen worden, ein Eindruck, der von der enthaltenen Isomaltulose offensichtlich kompensiert wurde. Bei der Bewertung der Gesamtqualität erhielt jedoch das isomaltulosehaltige Bier wiederum die leicht bessere Bewertung.

Die isomaltulosehaltigen Biere wurden in der Mehrzahl nicht als deutlich unterschiedlich zu den Referenzbieren wahrgenommen. In der Gesamtqualität kann die Zugabe den Eindruck des Bieres durch Kompensierung von störenden Geschmackseinflüssen, wie z. B. kräftiger Bittere, etwas "runder" erscheinen lassen.

### Beispiel 8: Isomaltuloseverwertung von Bakterien und Einfluss von biereigenen Selektivfaktoren auf die Isomaltuloseverwertung von Hefen

### 8.1 Herstellung des Mediums

Es wurde eine 5 % Isomaltulose und 6,7 g/l YNB (Yeast Nitrogen Base) enthaltene Modelllösung steril hergestellt. Die Inkubation erfolgte bei 26 °C im 10 ml Maßstab in Reagenzgläsern mit Durham-Röhrchen.

Die jeweiligen Selektivfaktoren wurden wie folgt eingestellt:
- pH-Wert Manipulation mittels Zugabe von Phosphorsäure,
- Bitterstoffgehalt mittels Zugabe von Isohumulonen,
- Alkoholgehalt mittels Zugabe von 96 %igem, unvergälltem Ethanol und
- Ausschluss von Sauerstoff durch Bebrütung in Anaerobier-Töpfen.

Die Verwertung der Isomaltulose wurde mittels Kontrolle von Gasentstehung (visuell), der Messung mittels DNS-Methode (photometrisch) und der Analyse des Zuckerspektrums (HPLC) gemessen.

### 8.2 Untersuchte Mikroorganismen und Analysen

Es wurde die Isomaltuloseverwertung der folgenden Hefen untersucht:
- Saccharomyces carlsbergensis MJJ 11 (Brauereihefe);
- Saccharomyces cerevisiae MJJ 2 (Brauereihefe, guter Isomaltuloseverwerter);
- Schizosaccharomyces pombe (guter Isomaltuloseverwerter) und
- Saccharomyces diastaticus (Bierschädling, fähig zur Übervergärung).

Außerdem wurde die Isomaltuloseverwertung bekannter bierschädlicher Bakterien untersucht. Dazu wurden "Idealbedingungen", anaerob, 28 °C, 21 Tage Inkubation, gewählt:
- Pediococcus damnosus (DSM: 20331),
- Megasphera cerevisiae (Wildstamm),
- Pectinatus frisingensis (DSM: 20465) und
- Lactobacillus brevis (DSM: 20054).

Die Bezeichnung "Wildstamm" bedeutet, dass es sich hier um einen Stamm handelt, der aus kontaminiertem Bier isoliert wurde und keine DSM Nummer (DSM: Deutsche Sammlung von Mikroorganismen) besitzt.

Zusätzlich sind wegen der Bedeutung der Laktobazillen als Bierschädlinge und als probiotische Kulturen in der Lebensmittelindustrie weitere Laktobazillen zur Untersuchung gekommen:
- L. fructivorans (DSM: 20203),
- L. fructivorans (Wildstamm),
- L. corniformis (DSM: 20001),
- L. lindneri (DSM: 20690),
- L. lindneri (DSM: 20961),
- L. casei (DSM: 2001),
- L. curvatus (Wildstamm),
- L. brevis (DSM: 6235),
- L. brevis (Wildstamm),
- L. acidophilus (DSM: 20242),
- L. amylovorus (DSM: 20552),
- L. delbrückii (DSM: 20047),
- L. fermentum (DSM: 20049),
- L. gasseri (DSM:20077),
- L. johnsonii (DSM: 20553),
- L. plantarum (DSM: 12028),
- L. reuteri (DSM: 20015),
- L. rhamnosus (DSM: 20023) und
- L. salivarius (DSM: 20492).

Da von Lactobazillen aus der Literatur bekannt ist, dass diese Bakterienart nicht alle Aminosäuren synthetisieren kann, sind parallel zu dem unbehandelten Medium Experimente gemacht worden, bei denen das Medium zusätzlich 2 % Pepton enthielt. Wegen der ebenso aus der Literatur bekannten Einteilung der Lactobazillen in hopfentolerant und hopfenintolerant, ist eine dritte Versuchsreihe angesetzt worden, in denen das Medium 20mg/l Isohumulone enthielt.

Die Konzentration der Isomaltulose wurde mittels HPLC ermittelt als 42,3 g/l. Dieser Wert ist den untenstehenden Restgehalten nach Bebrütung als Ausgangswert gegenübergestellt. Das Modellmedium wurde unverändert und unter Zusatz biertypischer Selektivfaktoren inkubiert.

### 8.3 Ergebnisse

### 8.3.1 Hefen

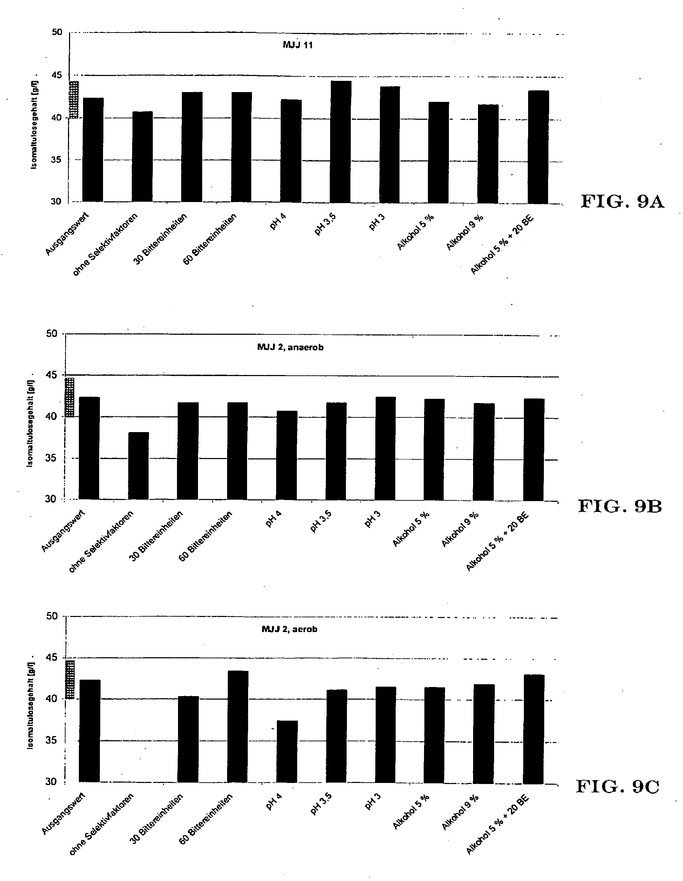

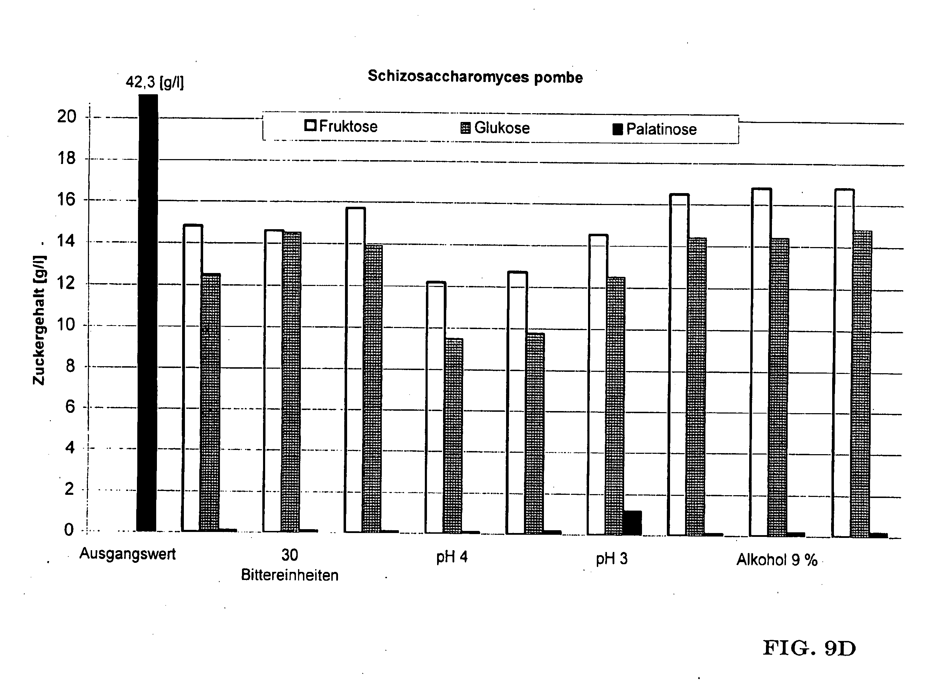

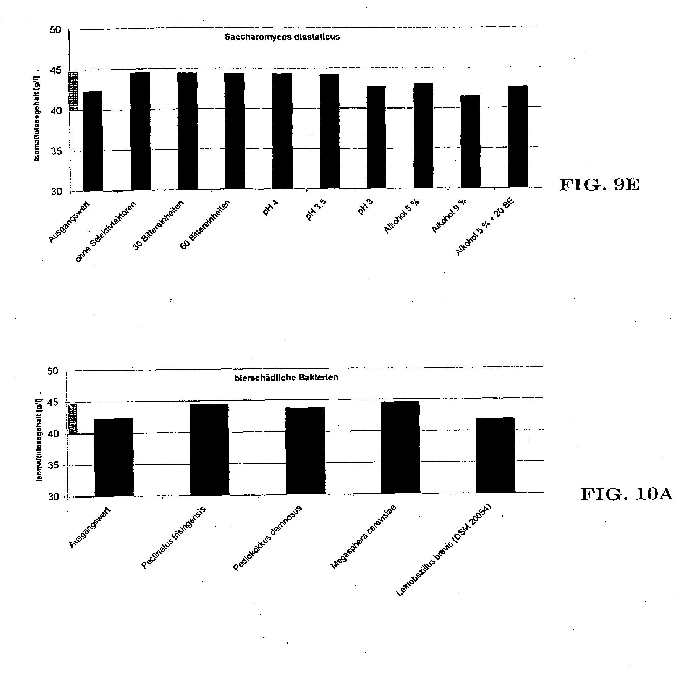

Nach 14 Tagen Bebrütungsdauer ergaben sich für Saccharomyces carlsbergensis MJJ 11 die in Figur 9 dargestellten Ergebnisse.

Figur 9a zeigt Isomaltulosegehalte in der unbebrüteten Modellösung und nach 14 Tagen Bebrütungsdauer (anaerob, 26 °C) mit Saccharomyces carlsbergensis MJJ 11 (gemessen mittels HPLC).

Es ist zu erkennen, dass die gemessenen Werte dem Ausgangswert mit einer Genauigkeit von 5 % entsprechen. Dies bedeutet, dass keine Verstoffwechselung der Isomaltulose stattgefunden hat. Der niedrigste Wert wurde in der Lösung ohne Selektivfaktoren gemessen, jedoch kann auch hier nicht von einer Abnahme durch Verstoffwechselung gesprochen werden. Anhand dieser Versuchsreihe kann gesagt werden, dass Saccharomyces carlsbergensis MJJ 11 Isomaltulose unabhängig von vorhandenen Selektiveinflüssen im betrachteten Zeitraum nicht vergären konnte.

In der folgenden Abbildung ist die entsprechende Versuchsreihe mit der Hefe Saccharomyces cerevisiae MJJ 2 dargestellt. Diese Hefe ist aus vorangegangenen Versuchsreihen als fähig zur Verwertung von Isomaltulose bekannt.

Figur 9b zeigt Isomaltulosegehalte in der unbebrütenden Modelllösung und nach 14 Tagen Bebrütungsdauer (anaerob, 26°C) mit Saccharomyces cerevisiae MJJ 2 (gemessen mittels HPLC).

Nach vierzehn Tagen Inkubation ist eine Abnahme im Ansatz ohne Selektivfaktoren gemessen worden. Jedoch ist auch hier diese Abnahme nur geringfügig und in keinem Ansatz, der modifiziert worden ist, wurde eine ähnliche Abnahme gemessen.

Figur 9c zeigt Isomaltulosegehalte in der unbebrütenden Modelllösung und nach 14 Tagen Bebrütungsdauer (aerob, 26°C) mit Saccharomyces cerevisiae MJJ 2 (gemessen mittels HPLC).

Wie enivartet, zeigte Saccharomyces cerevisiae MJJ 2 unter aeroben Bedingungen deutlich bessere Fähigkeiten, die Isomaltulose zu verwerten. Im unmodifizierten Ansatz sind nach 14 Tagen etwa 75 % der Isomaltulose verstoffwechselt. In aerober Atmosphäre ist zudem noch bei einem pH-Wert von 4 ein leichter Isomaltuloseabbau festgestellt worden, jedoch findet bei weiterer Absenkung des pH-Wertes keine Isomaltuloseverwertung mehr statt.

Schon die Abwesenheit von Sauerstoff dieser Hefe erschwert die Verwertung von Isomaltulose als Substrat stark. Das Vorhandensein von Hopfenbitterstoffen und Alkohol, sowie eine pH-Wertabsenkung unter den Wert 4 bringt die Verstoffwechselung von Isomaltulose komplett zum Stillstand.

Der gleiche Versuch wurde mit Schizosaccharomyces pombe durchgeführt. Figur 9d zeigt die Zuckergehalte in der unbebrüteten Modelllösung und nach 14 Tagen Bebrütungsdauer (anaerob, 26 °C) mit Saccharomyces pombe (gemessen mittels HPLC).

Klar zu erkennen ist, dass diese Hefe unter allen Versuchsbedingungen in der Lage ist, die angebotene Isomaltulose als Substrat zu nutzen. Lediglich im Ansatz mit dem niedrigsten eingestellten pH-Wert ist noch eine messbare Restkonzentration Isomaltulose vorhanden, so dass bei weiterem Absenken des pH-Wertes eventuell die Isomaltuloseverwertung unterbunden werden könnte, jedoch sind pH-Werte unter 3 nur in sehr wenigen Getränken zu finden, und auch dort liegen diese nicht sehr weit unter diesem Wert. Biertypische Selektivfaktoren, auch kombiniert, wie der Ansatz mit 5 % Alkohol und vorhandenen Hopfenbitterstoffen, sind nicht in der Lage, die Isomaltuloseverwertung zu verhindern.

Es wurde festgestellt, dass Schizosaccharomyces pombe die Isomaltulose effektiv verwerten kann. Die gemessenen Werte für die Einzelzucker Glukose und Fruktose legen nahe, dass diese Hefe die Isomaltulose extrazellulär spaltet, bevor die Einfachzucker dann assimiliert werden.

Ein anderes Bild zeigte sich nach der Durchführung der Versuchsreihe mit der als Getränkeschädling bekannten Hefe Saccharomyces diastaticus. Figur 9e zeigt die Isomaltulosegehalte in der unbebrüteten Modelllösung und nach 14 Tagen Bebrütungsdauer (anaerob, 26 °C) mit Saccharomyces diastaticus (gemessen mittels HPLC).

In keinem der untersuchten Ansätze ist eine Abnahme der Isomaltulosekonzentration nachgewiesen worden. Wieder bleiben die Werte in einem Schwankungsbereich von 5 % konstant, so dass gefolgert werden kann, dass Saccharomyces diastaticus nicht in der Lage ist, Isomaltulose zu vergären.

### 8.3.2 Bakterien

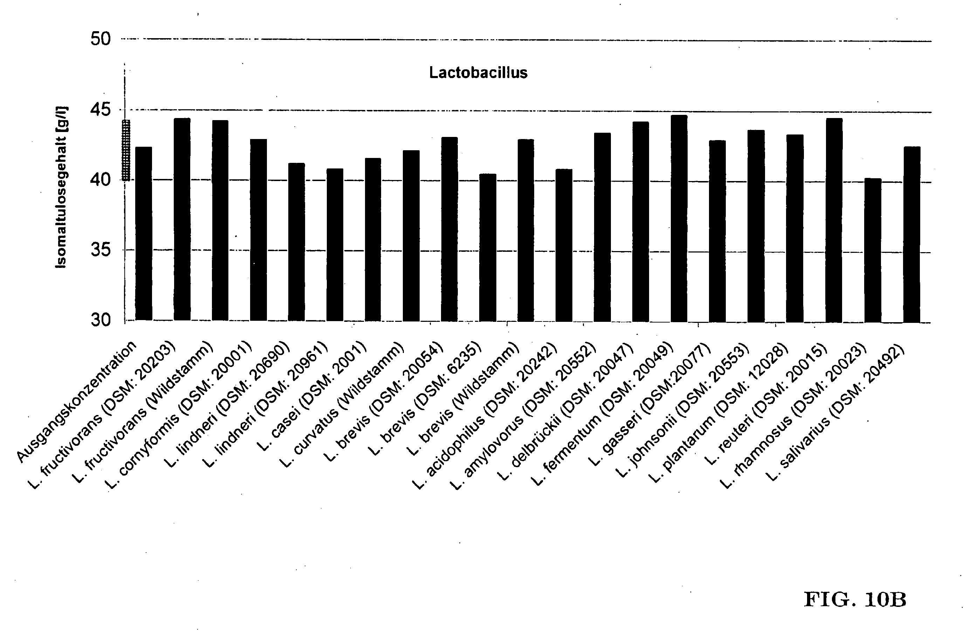

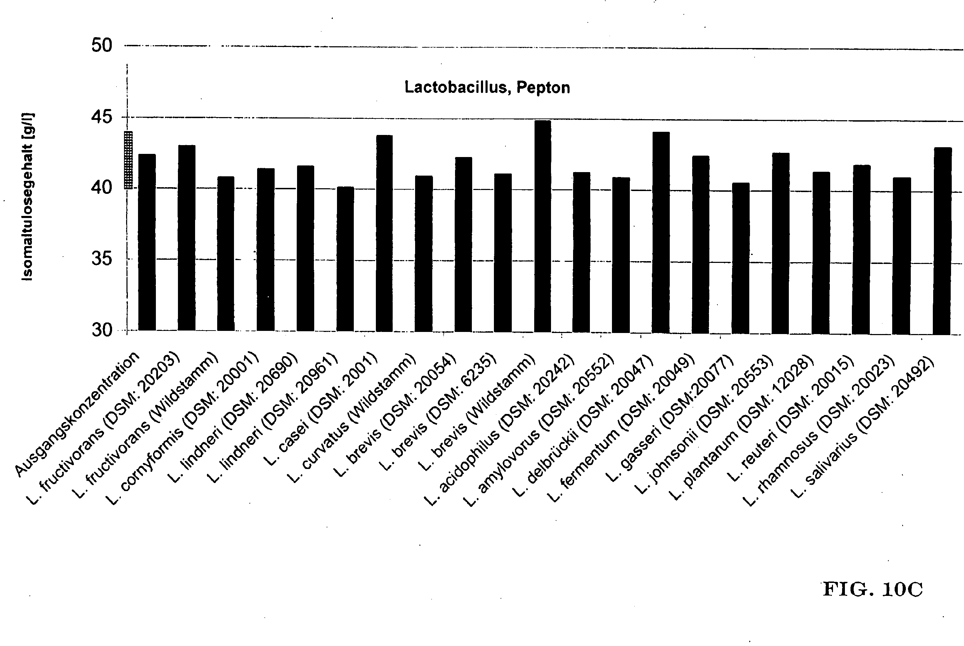

In der Figur 10 sind die Ergebnisse der Bebrütungsversuche mit vier bekannten bierschädlichen Bakterien dargestellt.

Figur 10a zeigt Isomaltulosegehalte in der unbebrütenden Modelllösung und nach 21 Tagen Bebrütungsdauer (anaerob, 28 °C) mit ausgewählten bierschädlichen Bakterien (gemessen mittels HPLC).

In keinem der Ansätze ist im Rahmen der Messgenauigkeit Isomaltuloseverwertung nachgewiesen worden. Keines der hier untersuchten Bakterien ist in der Lage, auf der Grundlage von Isomaltulose zu wachsen.

In Anbetracht der Bedeutung der Gruppe der Laktobazillen, nicht nur als Bierschädlinge, sondern auch als Organismen in der Darm- und Dentalflora von Säugetieren und der Einsetzbarkeit als probiotische Kulturen in der Lebensmittelindustrie sind zusätzlich eine Gruppen von verschiedenen Laktobazillen auf die Fähigkeit Isomaltulose zu verwerten geprüft worden.

Figur 10b zeigt Isomaltulosegehalte nach 21 Tagen Bebrütungsdauer (anaerob, 28 °C) mit verschiedenen Laktobazillen (gemessen mittels DNS-Assay).

Nach der langen Bebrütungsdauer von drei Wochen sind die Schwankungen in den Isomaltulosekonzentrationen innerhalb von 5 %. Die niedrigsten Werte sind gemessen worden für die Bakterien L. lindnerii 20961, L. brevis 6235 und L. rhamnosus 20023. Die Werte liegen innerhalb der 5 % Schwankungsbreite und es ist zudem visuell kein Zellmassenwachstum beobachtet worden. Anhand dieser Messung kann also nicht gesagt werden, dass die untersuchten Organismen in der Lage sind, Isomaltulose zu verwerten.

Da aus der Literatur bekannt ist, dass Laktobazillen nicht alle Aminosäuren synthetisieren können, ist eine weitere Versuchsreihe durchgeführt worden, in der der Modelllösung 2 % Pepton zugegeben wurde. So soll ausgeschlossen werden, dass eventuelles Wachstum nur wegen nicht vorhandener Stickstoffquellen nicht nachgewiesen wurde.

Figur 10c zeigt Isomaltulosegehalte nach 21 Tagen Bebrütungsdauer (anaerob, 28 °C) mit verschiedenen Laktobazillen, mit zusätzlicher Peptonzugabe (gemessen mittels DNS-Assay).

Wiederum ist bei keinem Messwert eine Abnahme von mehr als 5 % gegenüber dem Ausgangswert gemessen worden. Es fällt jedoch auf, dass hier mehrere Werte recht nah an diesen Grenzwert kommen. Weiterhin ist zu bemerken, dass bei den Organismen, die in der Messreihe ohne Pepton die niedrigsten Werte hatten, wieder recht niedrige Werte gemessen wurden.

Für Organismen wie Lactobacillus lindnerii 20961 ist nicht mit absoluter Sicherheit auszuschließen, dass nach entsprechender Adaption eine Verwertung von Isomaltulose möglich ist. Es ist jedoch in Betracht zu ziehen, dass hier drei Wochen lang unter nahezu idealen Bedingungen inkubiert wurde, die Isomaltulosekonzentrationen aber trotzdem nur geringfügig abnahmen. Daher, und in Anbetracht eventueller Messungenauigkeiten (einige Werte sind höher als die Ausgangskonzentration), kann anhand der hier dargestellten Messungen eine Verwertung nicht als nachgewiesen angesehen werden. Entsprechend ergab die Versuchsreihe, in der der Lösung Hopfenbitterstoffe als Hemmstoff zugesetzt wurden, dass auch hier die Messwerte nach Inkubation nicht kleiner als 95 % vom Ausgangswert waren. Es wurde also wiederum keine Verwertung der Isomaltulose im betrachteten Zeitraum nachgewiesen.

## Patentansprüche

1. Verfahren zur Herstellung von mikrobiologisch stabilisiertem Bier oder Biermischgetränk, enthaltend die Schritte:
a) Vermischen von Brauwasser, Hopfen und einer Kohlenhydratquelle zu einer Würze,
b) Kochen der Würze und
c) mikrobielles Vergären der Würze,
**dadurch gekennzeichnet, dass** Isomaltulose, zusätzlich oder ausschließlich, nach der Filtration des Bieres oder, zusätzlich oder ausschließlich; unmittelbar vor dem Abfüllen oder vor der Lagerung des Bieres oder Biermischgetränks zugegeben wird.

2. Verfahren nach Anspruch 1, wobei die Kohlenhydratquelle vermälztes Getreide und/oder Getreide-Rohfrucht enthält.

3. Verfahren nach einem der vorhergehenden Ansprüche, wobei das Isomaltulose-haltige Gemisch oder die Isomaltulose als Sirup, in Lösung oder als kristalliner Feststoff zugesetzt wird.

4. Verwendung von Isomaltulose als keimstabilisierendes Agens zur mikrobiologischen Stabilisierung von Bier oder Biermischgetränk.

## Claims

1. A method for the production of microbiologically stabilised beer or mixed beer beverage, containing the steps of:
a) mixing of brewing liquor, hops and a source of carbohydrate to form a wort,
b) boiling the wort and
c) microbially fermenting the wort,
**characterized in that** isomaltulose is added, additionally or exclusively, after filtration of the beer or, additionally or exclusively, directly before bottling or before storing the beer or mixed beer beverage.

2. Method according to claim 1, wherein the source of carbohydrate contains malted grain and/or raw grain.

3. Method according to any of the preceding claims, wherein the isomaltulose-containing mixture or the isomaltulose is added as syrup, in solution or as a crystalline solid.

4. Use of isomaltulose as germ-stabilising agent for the microbiological stabilisation of beer or mixed beer beverage.

## Revendications

1. Procédé de fabrication de bière ou d'une boisson à base de mélange de bière stabilisée par voie microbiologique, contenant les étapes de :
a) mélange d'eau de brassage, de houblon et d'une source de glucide à une épice,
b) cuisson de l'épice et
c) fermentation microbienne de l'épice,
**caractérisé en ce que** de l'isomaltulose est ajouté en plus ou exclusivement après la filtration de la bière ou en plus ou exclusivement directement avant la mise en bouteilles ou avant le stockage de la bière ou de la boisson à base de mélange de bière.

2. Procédé selon la revendication 1, dans lequel la source de glucide contient des céréales maltées et/ou du fruit brut de céréales.

3. Procédé selon l'une quelconque des revendications précédentes, dans lequel le mélange contenant de l'isomaltulose ou l'isomaltulose est ajouté en tant que sirop, en solution ou en tant que solide cristallin.

4. Utilisation d'isomaltulose en tant qu'agent de stabilisation bactérienne pour la stabilisation microbiologique de bière ou d'une boisson à base de mélange de bière.
